# EUROPEAN PATENT APPLICATION

(11) **EP 4 586 180 A1**
(43) Date of publication of application: **16.07.2025**
(21) Application number: 23862970.3
(22) Date of filing: 25.08.2023
(51) Int. Cl.: G06Q 50/10

(54) **INFORMATION PROCESSING DEVICE, INFORMATION PROCESSING METHOD, AND PROGRAM**

(30) Priority: 08.09.2022 JP 2022143217
(71) Applicant: Sony Group Corporation, Tokyo 108-0075 (JP)
(72) Inventor: KOEDA, Tatsuya, Tokyo 108-0075 (JP); MORIKUNI, Baku, Tokyo 108-0075 (JP); AKAGAWA, Satoshi, Tokyo 108-0075 (JP); NONOYAMA, Yo, Tokyo 108-0075 (JP); ITO, Keisuke, Tokyo 108-0075 (JP); ABE, Hajime, Tokyo 108-0075 (JP)
(74) Representative: 2SPL Patentanwälte PartG mbB
(86) International application number: PCT/JP2023/030758
(87) International publication number: WO 2024/053431

(57) **Abstract**

An information processing device includes a calculation unit configured to perform generation control processing of a digital item corresponding to a game on the basis of game information that is information regarding the game.

## Description

### TECHNICAL FIELD

The present technology relates to an information processing device, an information processing method, and a program, and particularly relates to a technology of a service for providing a digital item according to a game.

### BACKGROUND ART

In recent years, there are services for providing various types of information during a sports game such as baseball, soccer, and basketball.

For example, Patent Document 1 describes a system that acquires information of game progress and play content at a venue in real time, and provides the information to a third party by centralized management at a center.

Furthermore, Patent Document 2 describes a communication processing system capable of sequentially reporting game information of a plurality of games performed in a plurality of stadiums.

### CITATION LIST

### PATENT DOCUMENT

Patent Document 1: Japanese Patent Application Laid-Open No. 2002-268806
Patent Document 2: Japanese Patent Application Laid-Open No. 8-299525

### SUMMARY OF THE INVENTION

### PROBLEMS TO BE SOLVED BY THE INVENTION

In a sports game such as baseball, soccer, and basketball, many fans visit a stadium as spectators to watch the game. Furthermore, many people watch television broadcasts or the like. For the development of sports culture, it is desirable to further increase the degree of satisfaction of spectators and expand enjoyment regarding such game watching experiences.

In this regard, the present disclosure proposes a technology of providing a service capable of further enhancing enjoyment of a user who is a spectator in association with game watching.

### SOLUTIONS TO PROBLEMS

An information processing device according to the present technology includes a calculation unit that performs generation control processing of a digital item corresponding to a game on the basis of game information that is information regarding the game.

For example, the digital item is newly generated or edited as a process of generating the final digital item according to game information such as information decided regarding the game and information generated by the progress of the game.

### BRIEF DESCRIPTION OF DRAWINGS

Fig. 1 is an explanatory diagram of an information providing system according to an embodiment of the present technology.
Fig. 2 is a block diagram of the information providing system according to the embodiment.
Fig. 3 is an explanatory diagram of a functional configuration of the information providing system according to the embodiment.
Fig. 4 is a block diagram of the information processing device according to the embodiment.
Fig. 5 is an explanatory diagram of a screen example by a game linked service according to the embodiment.
Fig. 6 is an explanatory diagram of a screen example for user interaction according to the embodiment.
Fig. 7 is an explanatory diagram of a screen example for the user interaction according to the embodiment.
Fig. 8 is an explanatory diagram of a screen example of an initial item according to the embodiment.
Fig. 9 is an explanatory diagram of editing of the item according to the embodiment.
Fig. 10 is an explanatory diagram of editing of the item according to the embodiment.
Fig. 11 is an explanatory diagram of editing of the item according to the embodiment.
Fig. 12 is an explanatory diagram of a screen example regarding a quiz according to the embodiment.
Fig. 13 is an explanatory diagram of a screen example as a benefit according to the embodiment.
Fig. 14 is an explanatory diagram of a screen example of an item collection list according to the embodiment.
Fig. 15 is an explanatory diagram of an example of communication in the game linked service according to the embodiment.
Fig. 16 is a flowchart of a first processing example of a calculation unit during a game according to the embodiment.
Fig. 17 is a flowchart of a user information confirmation/acquisition processing example according to the embodiment.
Fig. 18 is a flowchart of an editing and point processing example of the embodiment.
Fig. 19 is a flowchart of a processing example of the calculation unit after the game according to the embodiment.
Fig. 20 is a flowchart of a second processing example of the calculation unit during the game according to the embodiment.

### MODE FOR CARRYING OUT THE INVENTION

Hereinafter, an embodiment will be described in the following order.
<1. System Configuration>
<2. Screen and Content Example of Game Linked Service>
<3. Flow of Game Linked Service>
<4. First Processing Example>
<5. Second Processing Example>
<6. Conclusion and Modifications>

Note that, in the present disclosure, an information processing device will be described which performs generation control processing of digital content in a service provided to a user in accordance with a sports game. However, "generation" of a digital item includes not only creation of a new digital item but also editing of an existing digital item. That is, the generation of the digital item includes, for example, processing of editing, processing, updating, and the like of the digital item up to a final form.

Furthermore, in the present disclosure, "editing" of a digital item is used as a term including not only editing but also any editing, processing, information addition, association, and the like with respect to the digital item to update the information.

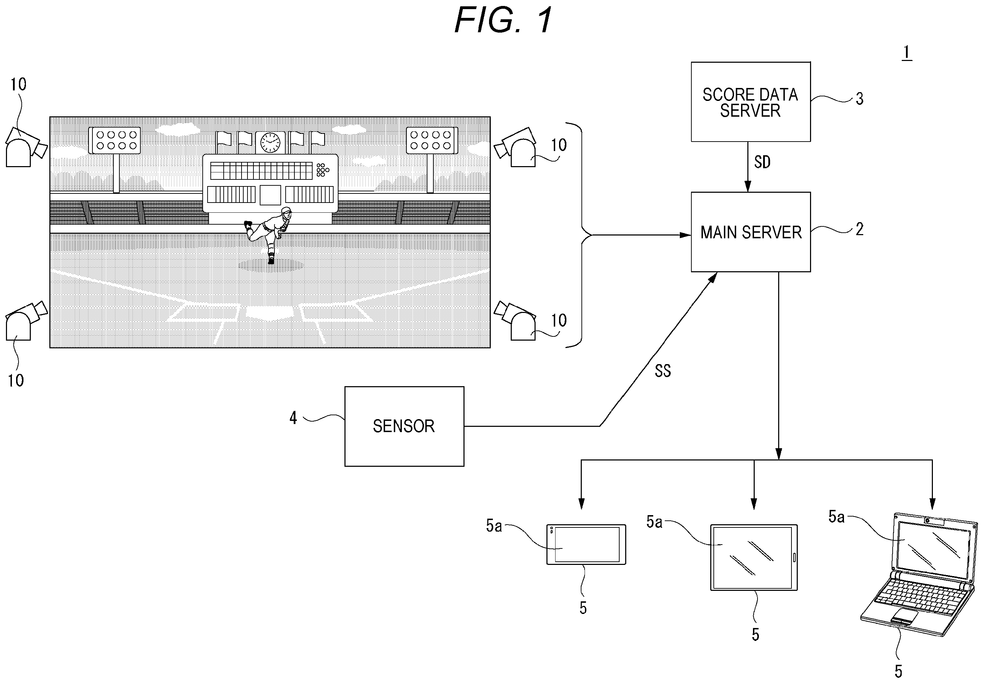

Furthermore, in the present disclosure, an "image" includes both a moving image and a still image. It is assumed, for example, that imaging devices 10 illustrated in Fig. 1 mainly capture moving images, but images displayed on terminal devices 5 may be moving images or still images. Furthermore, the "image" refers to an image actually displayed on a screen, but the "image" in a signal processing process or a transmission path until being displayed on the screen refers to image data.

### <1. System Configuration>

Fig. 1 illustrates an outline of an information providing system 1 according to the embodiment.

The information providing system 1 of Fig. 1 includes the imaging devices 10, a main server 2, a score data server 3, a sensor 4, and the terminal devices 5. These components are connected to one another via wired communication, wireless communication, network communication, or the like.

The information providing system 1 is a system that realizes a service (hereinafter referred to as "game linked service") that provides a user having the terminal device 5 with a digital item linked with a game. In this game linked service, fans of a team or a player, or the like are assumed as users, and for example, when these users watch a game, a digital item generated according to the game or according to the game and the users is provided to the terminal devices 5.

Accordingly, the user can obtain not only the enjoyment of watching the game itself but also the enjoyment provided by the game linked service.

For example, the plurality of imaging devices 10 in the information providing system 1 images an area of a subject in a stadium such as a baseball ground, for example, a state of a game from various positions. Note that, although the plurality of imaging devices 10 is illustrated, at least one imaging device 10 is only required to be provided.

For example, in the case of baseball, the imaging device 10 is used to capture an image for analyzing the movement of a pitcher, a fielder, a batter, and a runner and determining the trajectory, pitch type, speed, rotation, and the like of a ball.

In the information providing system 1, skeleton capture data of a subject of a player is extracted from such a captured image of the imaging device 10, and a motion of the player, for example, a pitching motion, a batting motion, a base running motion, or the like can be determined on the basis of the skeleton capture data. Furthermore, not only the movement of the player but also the movement of a sports object such as a ball or a bat may be determined.

In recent years, regarding the play of sports such as soccer or basketball, there has been known a technology for estimating the posture and the position of a player/referee, the position/rotation of a ball, and the like in a designated field from an image obtained by a dedicated camera or information obtained by a sensor (acceleration sensor or GPS sensor) attached to a person (player) or an object (ball) related to the sports as an electronic performance and tracking systems (EPTS).

More specifically, the imaging devices 10 capture images for obtaining such EPTS data as skeleton capture data.

Furthermore, the images captured by the imaging devices 10 can also be used as live-action images of a game or the like.

The EPTS data generated on the basis of images captured by the imaging devices 10 is transmitted to the main server 2. For example, in a case where an information processing device (not illustrated) that records images captured by the plurality of imaging devices 10 and generates EPTS data on a stadium side such as a baseball ground is provided, the EPTS data generated by the information processing device is transmitted to the main server 2.

Alternatively, captured images obtained by the imaging devices 10 may be transmitted to the main server 2, and the main server 2 may generate EPTS data.

The sensor 4 is a sensor that detects the movement of a player, a ball, or the like. Specifically, a sensor, which is attached to a player and a ball, such as an acceleration sensor, a gyro sensor, a global positioning system (GPS) sensor, an altitude sensor, and an impact sensor is assumed. For example, the sensor may be a wearable sensor worn on a uniform or a body of a player, or may be a sensor built in a ball. Furthermore, the sensor may be a radar or the like.

The movement information of the player can also be obtained from sensing data SS by the sensor 4 as described above. Alternatively, the sensing data SS can be used as supplementary information in a case where skeleton capture data is obtained from images or postures or the like are estimated. Furthermore, the sensing data SS by the sensor 4 can also be used for the speed, rotation speed, and trajectory of a ball, the swing speed and trajectory of a bat, and the like.

The sensing data SS may be transmitted to the main server 2, or may be input to the information processing device (not illustrated) that generates EPTS data on a stadium side such as a baseball ground.

The score data server 3 is, for example, an information processing device of an association that generates and distributes score data SD of baseball. Here, the score data server 3 is configured as a server device capable of transmitting the score data SD of a game to the main server 2.

The score data server 3 may sequentially transmit the score data SD to the main server 2 during the game, or may collectively transmit all the score data SD of the game after the game, for example.

In the case of baseball, the score data SD includes various types of information of a game as follows.

For example, the score data includes not only information of the entire game such as a score in each inning of the game and information of participating players but also information for each pitch of a pitch of a pitcher. The score data includes, for each pitch, the information of, for example, a pitching time, a pitcher's name, a batter's name, whether a batter is right-handed or left-handed, presence or absence of a runner on first base, second base, or third base, a runner's name, a strike/ball count, whether the pitch is a ball or a strike, an out count, a batting result (hit, swinging and miss, overlooking, foul, ground ball out, fly out, foul fly, and the like), a ball speed, a type of pitch, a rotation speed, a rotation axis, a course, and various types of other information.

The terminal device 5 is, for example, an information processing device such as a smartphone, a tablet terminal, or a personal computer, and as the terminal device 5, a device possessed by a general user as described above is assumed. Then, an image including a digital item is presented on a display unit 5a of the terminal device 5 by the game linked service.

The main server 2 performs various types of processing for information presentation in the terminal device 5 as a game linked service. For example, processing of determining the situation of a game or a player on the basis of skeleton capture data of a subject generated from an image captured by the imaging device 10 and providing a digital item corresponding thereto to the terminal device 5 is performed.

As the main server 2, an information processing device that performs cloud computing, that is, a cloud server can be assumed.

However, the processing for causing the terminal device 5 to display the image of the game linked service may be performed by an information processing device other than the cloud server. For example, it is also conceivable that an information processing device such as a personal computer installed in a venue has a function as the main server 2 and performs acquisition of skeleton capture data, processing of generating an image to be provided, and the like. Furthermore, it is also conceivable that the terminal device 5 also a function as the main server 2, and performs acquisition of skeleton capture data, processing of generating an image, and the like.

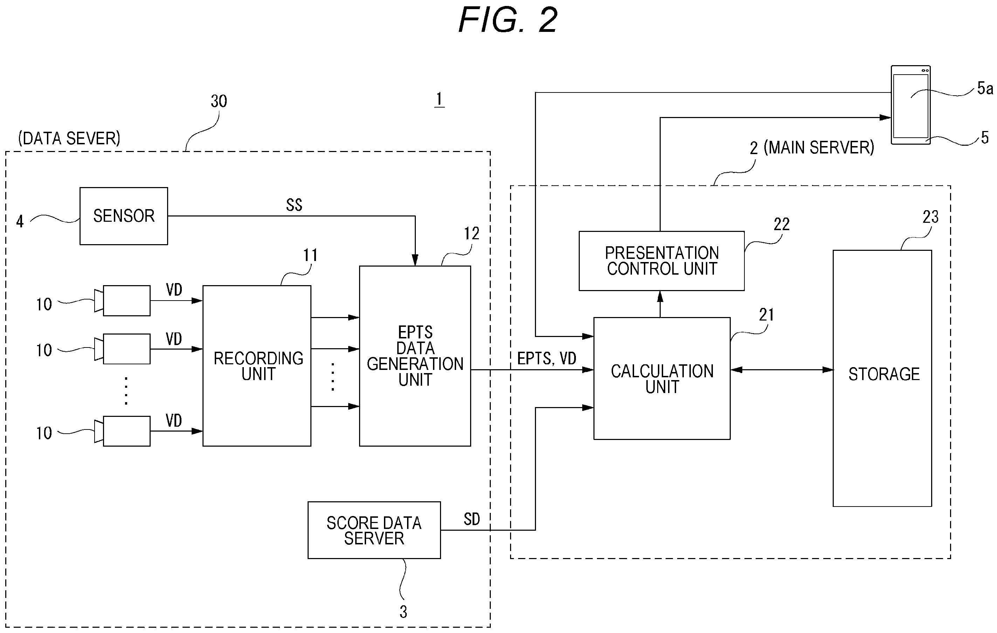

Fig. 2 illustrates an example of a configuration of the main server 2 and input/output related to the main server 2 in the information providing system 1 of Fig. 1 described above.

Furthermore, a portion that supplies data to the main server 2 is illustrated as a data server 30.

Note that the data server 30 in Fig. 2 is illustrated as a conceptual configuration, and collectively illustrates a configuration in which the main server 2 serves as an information source for executing the game linked service. For example, the data server 30 collectively refers to the imaging device 10, the score data server 3, the sensor 4, a recording unit 11, and an EPTS data generation unit 12.

Note that the imaging device 10 and the sensor 4 are arranged in a stadium, a player, a sports object, or the like as illustrated in Fig. 1. The installation place of the score data server 3 is not limited.

One or both of the recording unit 11 and the EPTS data generation unit 12 may be realized by an information processing device arranged in the stadium, or one or both may be provided on the main server 2 side.

The plurality of imaging devices 10 is implemented as, for example, digital camera devices including imaging elements such as charge-coupled device (CCD) sensors or complementary metal-oxide-semiconductor (CMOS) sensors, and obtains captured images as digital data. In this example, each imaging device 10 obtains a captured image as a moving image.

For example, in a baseball ground, each imaging device 10 is arranged at a predetermined position in order to image a pitcher, a fielder, a batter, a runner, and the like. The number of imaging devices 10 is one or more and is not particularly specified, but it is advantageous for the purpose of generating accurate EPTS data that the number is as large as possible.

Each of the imaging devices 10 captures a moving image in a synchronized state, and outputs the captured image.

The recording unit 11 records each captured image (image data VD) by the plurality of imaging devices 10, and supplies each captured image to the EPTS data generation unit 12.

The EPTS data generation unit 12 performs analysis processing on one or more captured images, generates EPTS data individually, and then generates overall EPTS data by integrating together the individual EPTS data. The EPTS data includes, for example, positions of players (pitcher, fielder, batter, or runner) or the ball at each frame timing, skeleton capture data of the players, postures of the players based on the skeleton capture data, information of a rotation speed and a rotation direction of the ball, and the like.

Furthermore, the EPTS data generation unit 12 may also generate EPTS data by using not only captured images but also the sensing data SS obtained by the sensors 4, that is, for example, information from the acceleration sensor embedded in the ball and the GPS sensors attached to uniforms of the players.

The EPTS data generation unit 12 can generate, as the EPTS data of the entire game, for example, information for determining a pitching motion, the speed and track of a ball, the behavior or batting result of a batter for a pitch, a base running result, the speed and trajectory of a bat, and the like for each of all pitches of a pitcher during a game.

Therefore, the EPTS data is an example of behavior information for either a person (such as a pitcher, a batter, and a runner) or a sports object (such as a ball and a bat) related to a game.

The EPTS data generation unit 12 can generate the EPTS data from a plurality of captured images obtained by a plurality of imaging devices 10, and can also generate the EPTS data from a plurality of captured images obtained by one imaging device 10. Furthermore, the EPTS data generation unit 12 can generate EPTS data from a plurality of images and the sensing data SS of one or more sensors and can generate EPTS data from one captured image and the sensing data SS of one sensor.

The EPTS data (skeleton capture data) generated by the EPTS data generation unit 12 is transmitted to the main server 2.

The image data VD captured by the imaging device 10 is also transmitted to the main server 2 via the EPTS data generation unit 12, for example.

Furthermore, the sensing data SS may be transmitted to the main server 2 and used as it is for the processing of the main server 2.

Note that although the EPTS data generation unit 12 may be provided in the main server 2, for example, in this case, the captured image (image data VD) by the imaging device 10 and the sensing data SS of the sensor 4 are only required to be transmitted to the EPTS data generation unit 12 in the main server 2 via network communication or the like.

Furthermore, as described with reference to Fig. 1, the score data SD is sequentially transmitted from the score data server 3 to the main server 2.

The main server 2 includes an information processing device such as a computer device, and is provided with, for example, a calculation unit 21 by a microprocessor or the like, a function as a presentation control unit 22, and a storage 23 by a storage medium accessible by the microprocessor or the like.

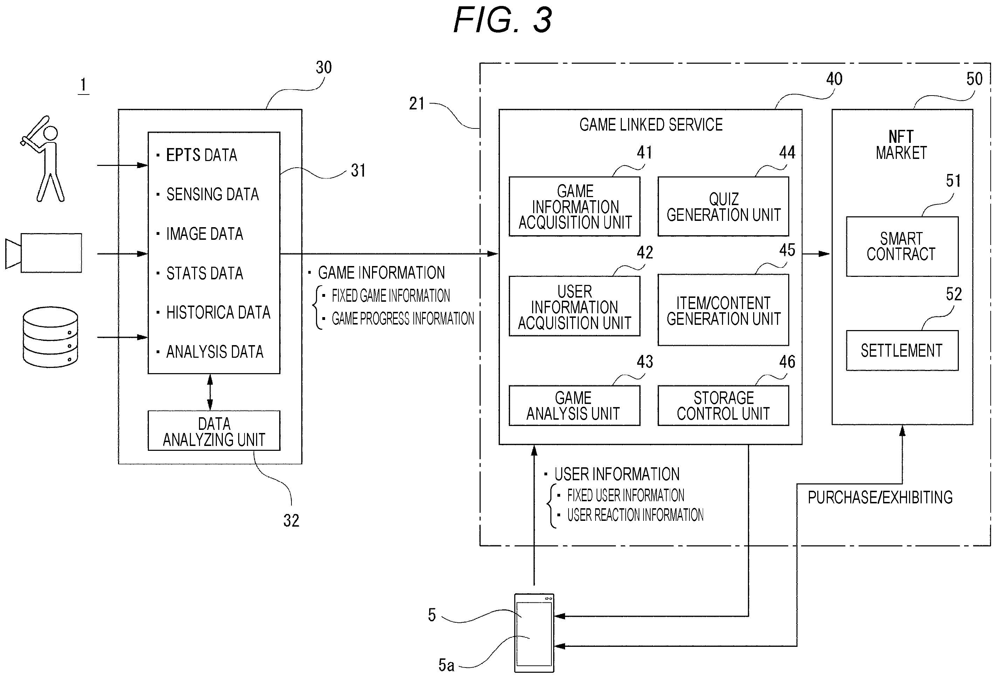

The calculation unit 21 executes various types of processing for acquiring information from the data server 30 and executing the game linked service using the acquired information, for example, data acquisition, game analysis, generation of digital items and content, and the like. The processing function of the calculation unit 21 will be described later with reference to Fig. 3.

The storage 23 indicates a storage medium in the main server 2 that stores information such as the received image data VD, skeleton capture data BD, and score data SD, and stores various types of data generated by the calculation unit 21.

The storage 23 may be an internal storage medium of the main server 2 or a storage medium separate from the information processing device constituting the main server 2.

The presentation control unit 22 performs control to causes the terminal device 5 to display various images generated by the processing of the calculation unit 21 in a predetermined mode. Specifically, the presentation control unit 22 performs processing of causing the display unit 5a of the terminal device 5 to display an image such as a digital item generated by the calculation unit 21 in execution of the game linked service.

The calculation unit 21, the presentation control unit 22, and the storage 23 described above may be provided in one information processing device, or may be provided separately in a plurality of information processing devices. Furthermore, various modes of implementing the configuration of the storage 23 using different types of storage media can be considered.

Such an image of the game linked service by the processing of the main server 2 or data for the image generation is transmitted to the terminal device 5 and displayed on the display unit 5a. Accordingly, the user carrying the terminal device 5 can view the image provided by the game linked service.

Furthermore, from the terminal device 5, user interaction information may be input to the calculation unit 21 during provision of the game linked service.

Fig. 3 illustrates the information transmitted from the data server 30 to the calculation unit 21 and a processing function of the calculation unit 21. In particular, in this drawing, a processing function for a game linked service function 40 and a processing function as a Non-Fungible Token (NFT) market function 50 which allows for the exhibiting of a result of the game linked service are illustrated.

Note that the calculation unit 21 of the present embodiment has a processing function of the game linked service function 40. The calculation unit 21 of the main server 2 may have the processing function of the NFT market function 50, but the processing function of the NFT market function 50 may be provided in another server device.

To summarize the information provided to the calculation unit 21 by the data server 30 described above, there are EPTS data, sensing data SS, image data VD, stats data, historical data, analysis data, and the like as illustrated in the drawing.

The stats data and the historical data are the score data SD by the score data server 3.

For example, the stats data is performance information of a player or a team. Examples of the stats data in the case of a baseball pitcher include a team name, a league affiliation, the number of wins, the number of losses, an earned run average (ERA), the number of games pitched, complete games, shutouts, saves, save opportunities, innings pitched, earned runs allowed, total runs allowed, home runs allowed, hit batsmen, walks allowed, intentional walks, strikeouts, batting average against, and walks plus hits per inning pitched (WHIP), a groundout/flyout ratio, and the like.

Furthermore, not only the past performance of the team or the player but also information of the performance of the team or each player up to the current time point of the game currently in progress, that is, detailed information of the progress of the game, information of registered players, information of starting members, information of substitute players, and the like are included in the stats data.

The historical data is also performance information of a team or a player and is included in the stats data in a broad sense, but here, for the sake of explanation, the historical data is indicated as information such as a past highest record, a team record, and a personal record. For example, the historical data includes information of records that may be achieved in the current game. For example, there are a record for the number of strikeouts in a past single game, a record for consecutive at-bats with hits, a record for consecutive games played, a record for the total number of team hits in a past single game, and the like. Such historical data is information that can be referred to for special digital item editing in the game linked service.

The analysis data indicates data determined by a function as a data analyzing unit 32 for the EPTS data, the sensing data SS, and the image data VD.

The function of the data analyzing unit 32 may be provided in the main server 2 or may be realized by another information processing device.

As the analysis data, specifically, a specific motion of a player determined from the EPTS data, the sensing data SS, or the like, a trajectory of a ball, or the like is assumed.

The EPTS data, the sensing data SS, the image data VD, the stats data, the historical data, and the analysis data supplied from the data server 30 to the calculation unit 21 are information regarding a game and are referred to as game information.

The game information indicates information regarding a game itself or information of a player or a team participating in the game, and is distinguished from user information to be described later.

The information regarding a game itself includes a game date and time, a venue, weather, a score, information regarding progress of the game (current inning, out-count), and the like.

The information of a player includes information of each player such as the performance of each player in a game, past performances, the image of the game, a play content, information of movement of the player, and the like.

The information of a team is information of the entire team such as the performance of the team in a game, past performances, the image of the game, a participating player, and a substitute player.

Note that all of the EPTS data, the sensing data SS, the image data VD, the stats data, the historical data, and the analysis data serving as the "game information" are not necessarily transmitted to the calculation unit 21. For example, when at least one of these is transmitted to the calculation unit 21, the calculation unit 21 can perform processing for the game linked service function 40.

Furthermore, there are user information and purchase/exhibiting information as the information input from the terminal device 5 to the calculation unit 21.

Here, the game information and the user information will be described. The "game information" referred to in the present disclosure has the following two information sources.
- The information provided from the score data server 3
- The Information obtained based on signals from the imaging device 10 and the sensor 4

The content of information obtained from the two types of information sources may be different or the same.

In the case of considering a content type of the game information, the game information is classified into "fixed game information" and "game progress information" in the present embodiment.

The fixed game information is information that does not change depending on the progress of a game.

For example, the fixed game information includes a location, date and time of the game, season, teams, starting lineup, weather information such as weather and temperature at the start of the game, team performance up to the game, bench players, player and team performance up to the game (stats data, historical data), referees, type of game (such as official game, championship game, and games related to championship magic numbers), players' conditions before the game, player profiles (birthdates, hometowns, and the like), and the like.

The game progress information is information obtained as the progress of the game.

For example, the game progress information includes a score (game progress/result), current inning/time/half, changes in weather during the game, player and team performance (stats data, historical data) according to the progress of the game, participating players, player actions (EPTS information/sensing data SS/analysis data), image data VD from the game, and achievement records, and the like.

The user information indicates information that the main server 2 can acquire about a target user (a user who logs in the game linked service function 40).

Here, a content type of the user information is considered and classified into "fixed user information" and "user reaction information".

The fixed user information is user information that does not change depending on the current game (the game watched by the logged-in user).

For example, the fixed user information includes user account information, address information, attribute information, history information related to the game linked service, and owned item information. The attribute information may include basic information such as age, gender, place of residence, and e-mail address, and information indicating a team and a player being supported in relation with the game linked service.

Note that some or all of the fixed user information may be input in advance for the user registered in the game linked service function 40, for example, and may be stored in the storage 23 or the like.

The user reaction information is information corresponding to an action or interaction of the user with respect to the current game or the game linked service.

For example, the user reaction information includes answers input to quizzes provided by the game linked service, information which is input by the user and indicates the team or player that the user supports for the current game, information input by the user during the game (such as the operation information of a WOW button 120 as described later), the watching place, current position, and seating information of the user, information of cheers of the user (or all spectators), and the like.

The calculation unit 21 inputs the game information (fixed game information, game progress information) and the user information (fixed user information, user reaction information) as described above regarding the processing of the game linked service function 40.

As processing functions for executing the game linked service function 40 in the calculation unit 21, a game information acquisition unit 41, a user information acquisition unit 42, a game analysis unit 43, a quiz generation unit 44, an item/content generation unit 45, and a storage control unit 46 are illustrated. Note that the calculation unit 21 does not need to have all of these processing functions.

The game information acquisition unit 41 is a function of acquiring the game information (fixed game information, game progress information). For example, processing of sequentially acquiring the game information from the data server 30 before the start of a game and during the game is performed.

The user information acquisition unit 42 is a function of acquiring the user information (fixed user information, user reaction information). For example, the user information of the logged-in user is sequentially acquired before the start of the game or during the game. At the time of login, processing of reading the fixed user information of the user stored in the storage 23 is also performed.

The game analysis unit 43 analyzes the game on the basis of the game information and the user information, and performs processing of determining the situation of the game. Furthermore, the game analysis unit 43 performs processing of determining a timing for requesting a response of the user regarding the service and determining a timing for editing the digital item according to the determination of the game situation.

The quiz generation unit 44 performs processing of generating a quiz or a questionnaire to be provided to the user and transmitting the quiz or the questionnaire to the terminal device 5. The quiz generation unit 44 can further perform processing for requesting user interaction in addition to the quiz and the questionnaire.

The item/content generation unit 45 generates an item 100 to be described later as a digital item. Furthermore, the item/content generation unit 45 performs generation processing of image content such as a digest video of a game, a free viewpoint image, or a computer graphics (CG) image. Furthermore, the item/content generation unit 45 also performs processing such as generation of information to be finally associated with the digital item. Furthermore, the item/content generation unit 45 also performs processing of generating and granting a point to be described later.

The storage control unit 46 performs processing of storing and reading information in and from the storage 23 regarding the game linked service function 40.

For the calculation unit 21 of the main server 2, the NFT market function 50 is also illustrated in addition to the game linked service function 40 as described above.

The NFT market function 50 is a service which allows the user to exhibit and sell an acquired NFT work or to purchase an NFT work being exhibited.

For example, in the case of the present embodiment, the digital item (item 100) generated by the game linked service function 40 is edited by the progress of a game and user interaction, and finally becomes a user-specific digital item. This digital item can be exhibited or purchased as an NFT work in the NFT market function 50.

Therefore, as the NFT market function 50, a smart contract function 51 and a settlement function 52 are provided.

The smart contract function 51 is a function of automatically executing predetermined trade processing according to a predetermined condition for trade transactions.

The settlement function 52 is a function of performing settlement processing regarding trade.

With such an NFT market function 50, the game linked service function 40 can allow a digital item to be exhibited and to be purchased by a user.

Furthermore, with the game linked service function 40, a user can exhibit a digital item acquired by the user or purchase a digital item sold by another person.

Note that the functional configuration of Fig. 3 is an example.

A part of the function as the game linked service function 40 can also be processed on the terminal device 5 side.

For example, a part of content generation functions (highlight, free viewpoint image, and the like) of the quiz generation unit 44, the game analysis unit 43, and the item/content generation unit 45 may be executed outside the game linked service function 40.

The calculation unit 21 is only required to perform generation control processing of a digital item corresponding to a game on the basis of at least game information.

Furthermore, the NFT market function 50 may not be provided. For example, processing of selling the digital item generated by the game linked service function 40 to a user may be considered.

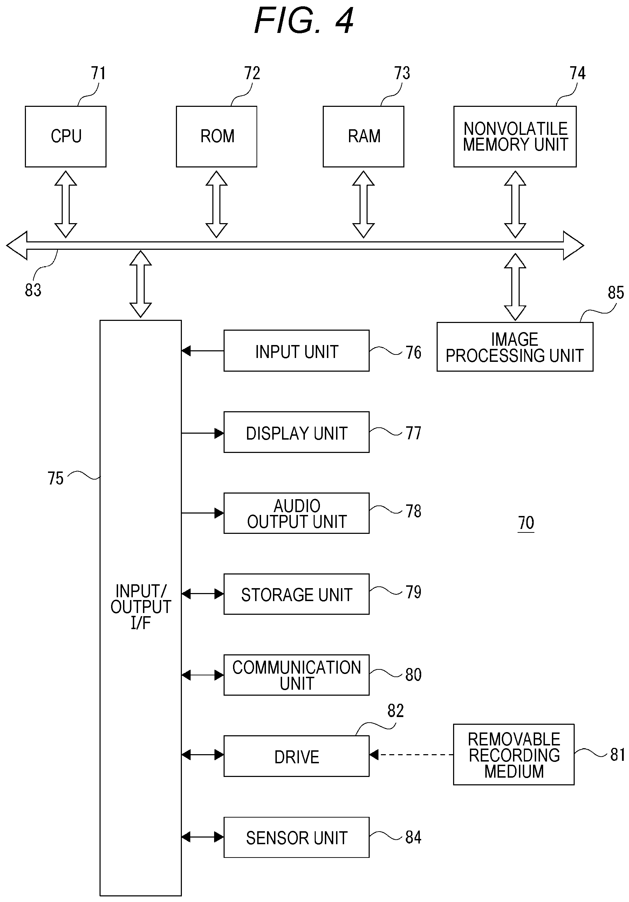

The configuration of the information processing device 70 used in the information providing system 1 described above with reference to Figs. 1, 2, and 3 will be described. For example, the main server 2, the terminal device 5, the EPTS data generation unit 12 in Fig. 2, and the like can be achieved by the information processing device 70 illustrated in Fig. 4.

Furthermore, the information processing device 70 may be implemented as, for example, a dedicated workstation, a general-purpose personal computer, a mobile terminal device, or the like.

A CPU 71 of the information processing device 70 illustrated in Fig. 4 performs various types of processing in accordance with a program stored in a ROM 72 or a nonvolatile memory unit 74 such as an electrically erasable programmable read-only memory (EEP-ROM), for example, or a program loaded from a storage unit 79 into a RAM 73. The RAM 73 also stores, as appropriate, data and the like necessary for the CPU 71 to perform the various types of processing.

An image processing unit 85 is implemented as a processor that performs various types of image processing. For example, the image processing unit 85 is a processor capable of performing any of image generation processing of a clip or the like, image analysis processing on a captured image or the like, generation processing of an animation image or a CG image, data base (DB) processing, image effect processing, EPTS data generation processing, and the like.

The image processing unit 85 can be achieved by, for example, a CPU separate from the CPU 71, a graphics processing unit (GPU), general-purpose computing on graphics processing units (GPGPU), an artificial intelligence (AI) processor, or the like.

Note that the image processing unit 85 may be provided as a function in the CPU 71.

The CPU 71, the ROM 72, the RAM 73, the nonvolatile memory unit 74, and the image processing unit 85 are connected to one another via a bus 83. An input/output interface 75 is also connected to the bus 83.

An input unit 76 including an operation element or an operation device is connected to the input/output interface 75. As the input unit 76, for example, one of various operation elements and operation devices including a keyboard, a mouse, a key, a dial, a touch panel, a touchpad, a remote controller, and the like is assumed.

The input unit 76 detects a user operation, and the CPU 71 interprets a signal corresponding to the input operation.

Furthermore, a display unit 77 including a liquid crystal display (LCD), an organic electro-luminescence (EL) panel, or the like and an audio output unit 78 including a speaker or the like are integrally or separately connected to the input/output interface 75.

The display unit 77 displays various pieces of information as a user interface. The display unit 77 is implemented as, for example, a display device provided in a housing of the information processing device 70, a separate display device connected to the information processing device 70, or the like.

The display unit 77 displays various images on a display screen on the basis of an instruction from the CPU 71. Furthermore, the display unit 77 displays various operation menus, icons, messages, and the like, that is, graphical user interfaces (GUIs), on the basis of an instruction from the CPU 71.

For example, in a case where the information processing device 70 is considered as the terminal device 5, the display unit 77 corresponds to the display unit 5a, and displays a screen such as a screen including the item 100 to be described later by the game linked service function 40.

In some cases, a storage unit 79 including a solid-state drive (SSD), a hard disk drive (HDD), or the like and a communication unit 80 including a modem or the like are connected to the input/output interface 75.

For example, in a case where the information processing device 70 is considered as the main server 2, the storage unit 79 can be considered as an example of the storage 23 in which information is stored by the storage control unit 46.

The communication unit 80 performs communication processing via a transmission path such as the Internet, and performs wired/wireless communication with various devices and communication based on bus communication or the like.

A drive 82 is also connected to the input/output interface 75 as necessary, and a removable recording medium 81 such as a flash memory, a memory card, a magnetic disk, an optical disc, or a magneto-optical disk is attached to the drive 82 as appropriate.

With the drive 82, data files such as image files, various computer programs, and the like can be read from the removable recording medium 81. The read data files are stored in the storage unit 79, and the display unit 77 and the audio output unit 78 output images and sounds included in the data files. Furthermore, the computer programs and the like read from the removable recording medium 81 are installed in the storage unit 79 as necessary.

With the information processing device 70, software can be installed through network communication by the communication unit 80 or the removable recording medium 81. Alternatively, the software may be stored in the ROM 72, the storage unit 79, or the like in advance.

For example, in a case where the information processing device 70 is considered as the main server 2, functions as the calculation unit 21, and the presentation control unit 22 described above are provided by software, and processing by these functions is performed by the CPU 71 and the image processing unit 85.

A sensor unit 84 is illustrated as a part that outputs the a certain type of sensing data SS, such as an image sensor (camera), a gyro sensor, an acceleration sensor, and a position sensor. For example, in a case where the information processing device 70 is implemented as the terminal device 5, the sensor unit 84 is provided so as to be able to detect the user's action, behavior, position, and the like.

### <2. Screen and Content Example of Game Linked Service>

A screen example in the terminal device 5 achieved in the game linked service will be described.

The game linked service is a service that performs the generation of a digital item related to a game (such as editing processing of the item itself and information addition with respect to the item) according to game information related to a sports game such as baseball.

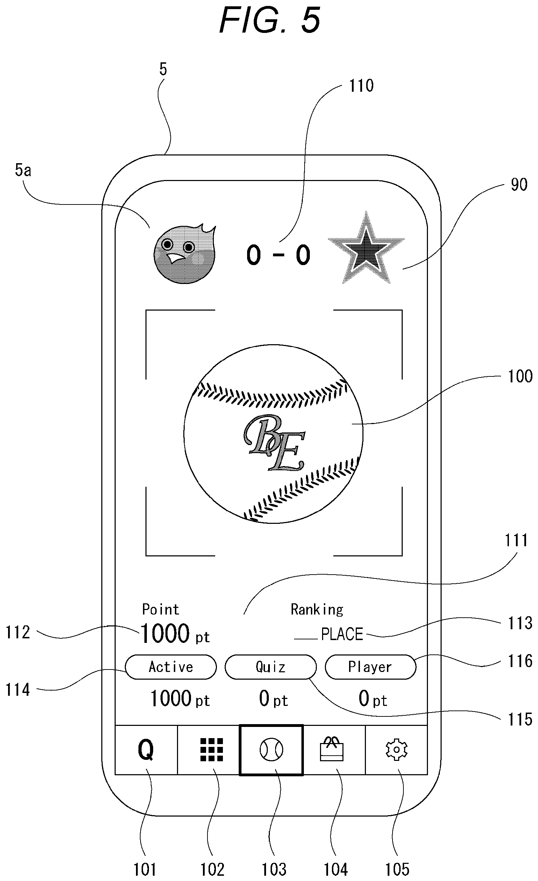

An example of provision screens by such a game linked service function 40 is illustrated in Fig. 5.

As one of the provision screens, there is an item screen 90. The item screen 90 is a screen that displays the item 100 which is a digital item.

The item 100 is, for example, a digital item related to the sports, and in the case of baseball, the item has a design such as a baseball. For example, in this example, the item 100 is a digital item having a design in which a team logo or the like is added to the ball.

Furthermore, on the item screen 90, information regarding the game and information regarding the user are displayed together with the item 100. In this example, team/score information 110 and point information 111 are displayed.

In the team/score information 110, a competing team is displayed with a logo, a mascot mark, or the like of the team, and the score of the current game is displayed.

The point information 111 indicates points for this user, that is, a user who logs in the game linked service and is viewing the provision screen on the terminal device 5.

For example, the point information 111 includes a current point 112, a ranking 113, an active point 114, a quiz point 115, a player point 116, and the like.

In the game linked service, a point is granted to the user according to a game situation or a user situation.

The point information 111 indicates the points acquired by the user regarding the target game, the current point 112 indicates the points that the user has currently earned in the current game, and the ranking 113 indicates the ranking of the points among all the logged-in users.

Furthermore, as a breakdown of the current point 112, the active point 114, the quiz point 115, and the player point 116 are shown.

The active point 114 is a point or the like granted in accordance with a user's input, action, or the like.

The quiz point 115 is a point granted by the user's answer to the quiz.

The player point 116 is a point granted by the performance or the like of the player selected by the user.

On the item screen 90 or another screen to be described later, a quiz icon 101, a collection icon 102, a ball icon 103, an NFT icon 104, and a setting icon 105 are displayed as selectable options.

The quiz icon 101 is an icon for an operation of transitioning to a quiz screen 140 to be described later. The collection icon 102 is an icon for an operation of transitioning to a collection screen 160 to be described later. The ball icon 103 is an icon for an operation of transitioning to the item screen 90. The NFT icon 104 is an icon for an operation of displaying an item as an NFT work. The setting icon 105 is an icon for an operation of transitioning to a setting screen (not illustrated).

Furthermore, these icons also present the current screen, and in the case of the item screen 90 as illustrated in Fig. 5, the ball icon 103 is displayed in a mode different from other icons. For example, in Fig. 5, the frame of the ball icon 103 is displayed to be thicker and emphasized than the frames of other icons.

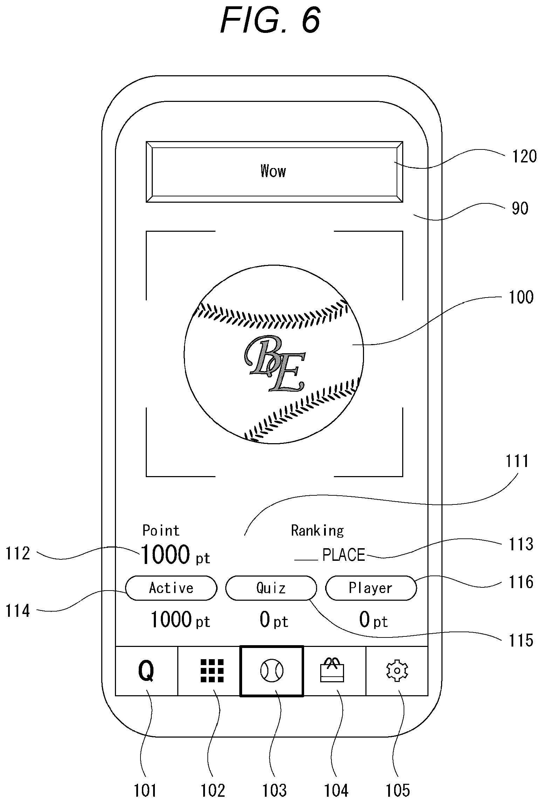

Other contents are sequentially displayed on the item screen 90. As illustrated in Fig. 6, the WOW button 120 may be displayed.

For example, in the game linked service, the WOW button 120 is displayed on the terminal device 5 at a timing of an excellent play or the like in a game, so as to be operable by the user. For example, the WOW button 120 is displayed at a timing when a hit or a home run is detected during a game, a timing when a pitching speed is detected to be faster than a threshold, a preset timing (a predetermined timing within the seventh inning), or the like. Furthermore, the user can arbitrarily operate the WOW button 120 according to, for example, emotions such as being moved, impressed, amazed, or excited with the play. The operation information of the WOW button 120 is acquired as one piece of the user reaction information by the main server 2.

Note that the WOW button 120 is always displayed on the item screen 90, for example, and may be operated by the user at any timing.

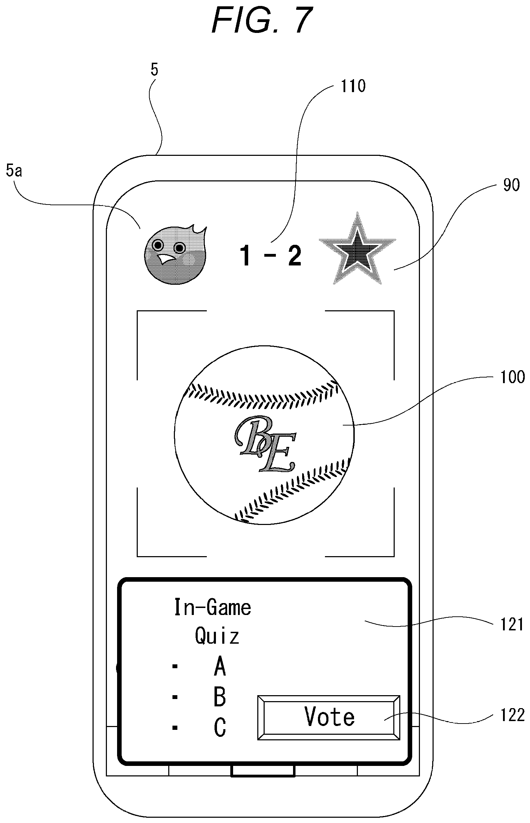

Furthermore, a quiz window 121 may be displayed on the item screen 90 as illustrated in Fig. 7.

An answer button 122 are displayed together with the content of the quiz in the quiz window 121. The user can answer the quiz by checking the answer option or operating the answer button 122.

The information of the answer of the user to the quiz is acquired as one piece of the user reaction information by the main server 2.

The item 100 is displayed as the main content on the item screen 90, and the main server 2 performs processing of changing the item 100 displayed on the terminal device 5 according to the game information or according to the game information and the user information (digital item generation control processing). That is, the processing is editing processing of the item 100 by the function of the item/content generation unit 45 in Fig. 3.

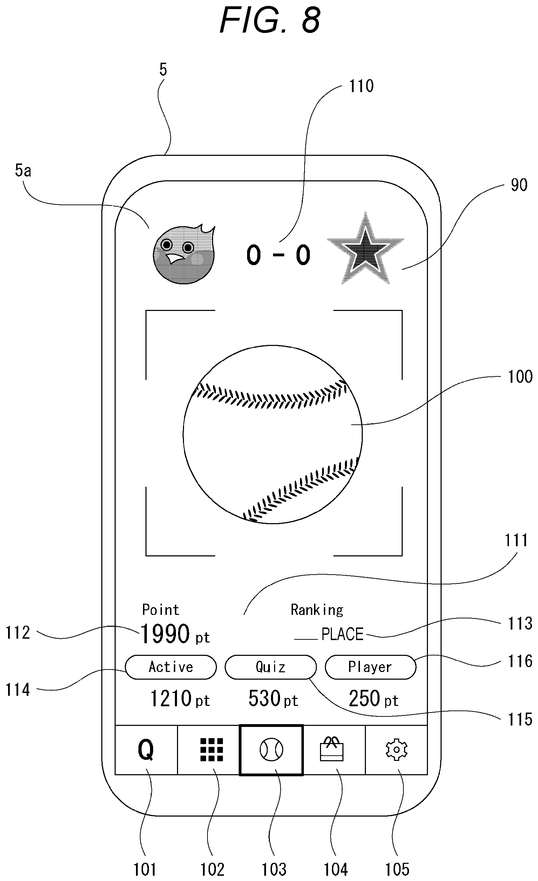

An example is illustrated in Figs. 8 to 11.

Fig. 8 illustrates a state in which the item 100 as a blank ball is displayed on the item screen 90.

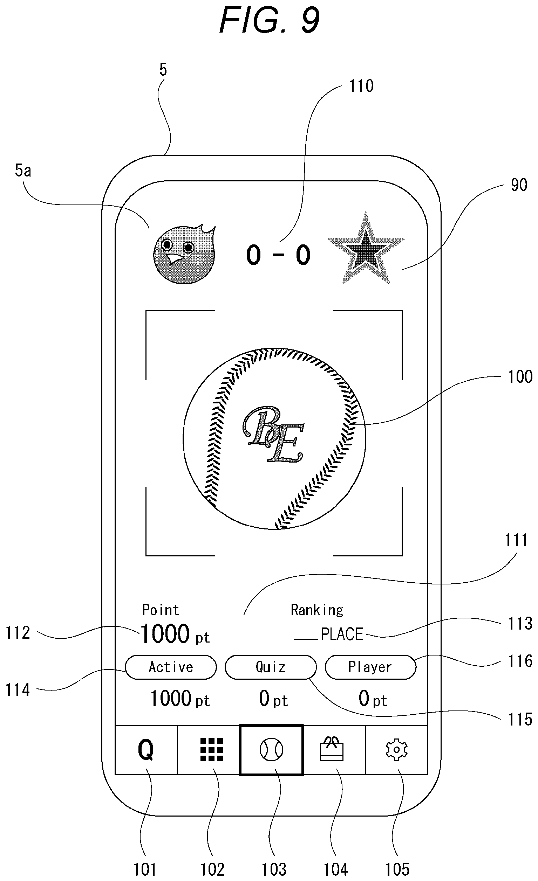

Fig. 9 illustrates a state in which the item 100 with a team logo added to the blank ball is displayed on the item screen 90.

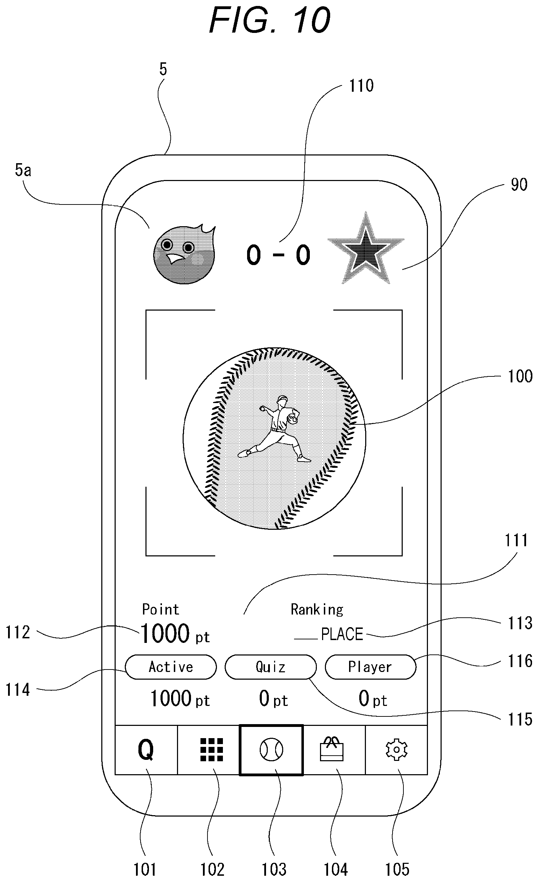

Fig. 10 illustrates a state in which the item 100 with some colors changed and a portrait of a player added is displayed on the item screen 90.

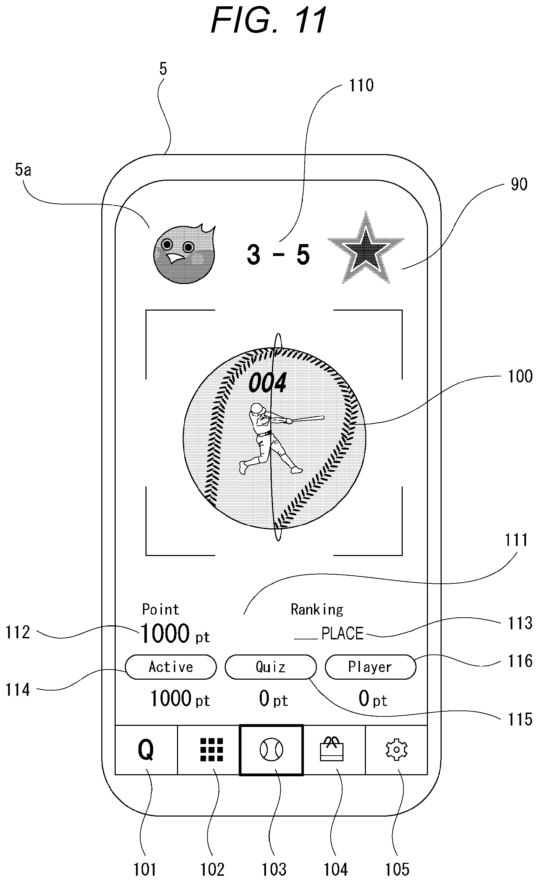

Fig. 11 illustrates a state in which the final item 100 is displayed at the time point of the end of the game.

For example, at the time point of the start of the game, the item 100 that is a blank ball is edited in accordance with the game progress information, the user reaction information, and the like, and the item 100 having a final design is completed at the time point of the end of the game.

The main server 2 can generate and provide the unique item 100 to the user for each game or each user by performing such editing of the item 100 in accordance with the progress of the game or the action of the user.

The main server 2 can provide the completed item 100 as a user-specific digital item to the user for free or for a fee. For example, the item 100 can be added as the user's NFT work to the user's collection.

Note that the item 100 on the item screen 90 may be a still image, or may be a moving image or an image with a predetermined movement. For example, in the case of the item 100 of a ball, an image in which the ball is rotating may be used.

Furthermore, display may be performed such that movement such as rotation is added by the user's operation on the item 100.

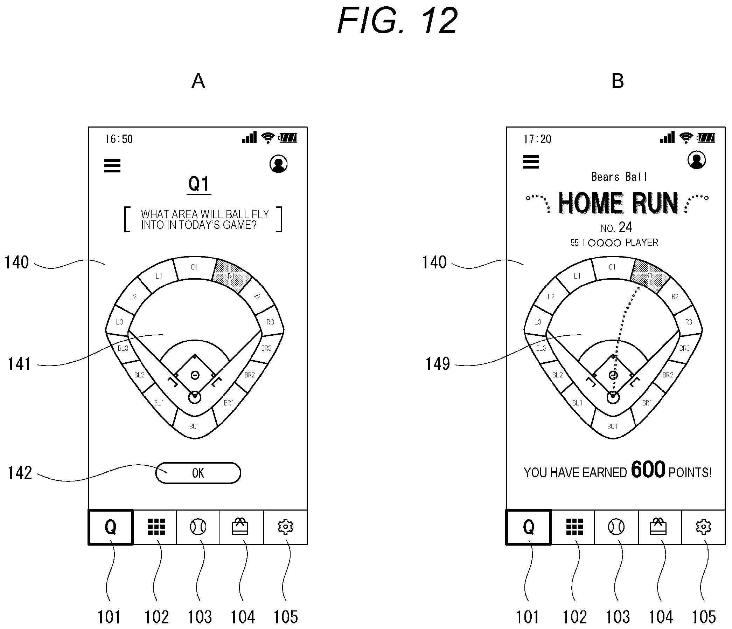

Fig. 12A illustrates the quiz screen 140.

For example, in a case where the user operates the quiz icon 101, the main server 2 provides the terminal device 5 with the quiz screen 140. Alternatively, the main server 2 may cause the terminal device 5 to automatically display the quiz screen 140 at a certain timing. For example, the main server 2 may automatically cause the quiz screen 140 to be displayed at a timing after the user logs in (a timing before the start of the game), a preset timing (a predetermined timing in the inning), or the like.

Furthermore, the provision of the quiz by the quiz window 121 as illustrated in Fig. 7 and the provision of the quiz by the quiz screen 140 of Fig. 12A may be executed together, or only one of them may be executed.

A quiz content 141 and an answer unit 142 are provided on the quiz screen 140 in Fig. 12A. In this example, the quiz content 141 is content for selecting an area into which a ball flies in the spectator seats of a baseball stadium. The user selects an arbitrary area and operates the answer unit 142, which becomes an answer.

For example, in a case where a hit ball flies as a home run or a foul to a spectator seat, if the place of the spectator seat is the area selected on the quiz screen 140, the user has answered the quiz correctly.

Fig. 12B illustrates a quiz result screen 149. This is an example in which when the home run ball has flown into the area selected by a user, a quiz result indicating a correct answer is displayed to the user. The result indicating a correct answer is also one piece of the user reaction information, and it is conceivable that a point is granted by the correct answer or the item 100 is edited.

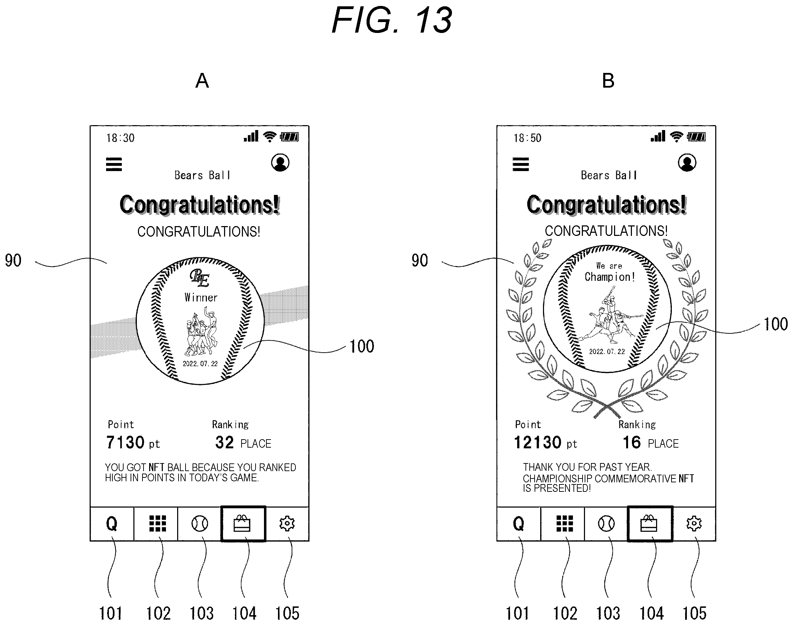

Figs. 13A and 13B are examples in which the item 100 that is an NFT work is displayed on the item screen 90. For example, in a case where the user operates the NFT icon 104, the main server 2 provides the item screen 90 to the terminal device 5 and causes the item 100 as the NFT work to be displayed. For example, Fig. 13A is a screen on which the item 100 generated for a person ranked high in the number of acquired points is approved as an NFT item. Fig. 13B is a screen in which the item 100 generated upon the victory of a support team is approved as an NFT item.

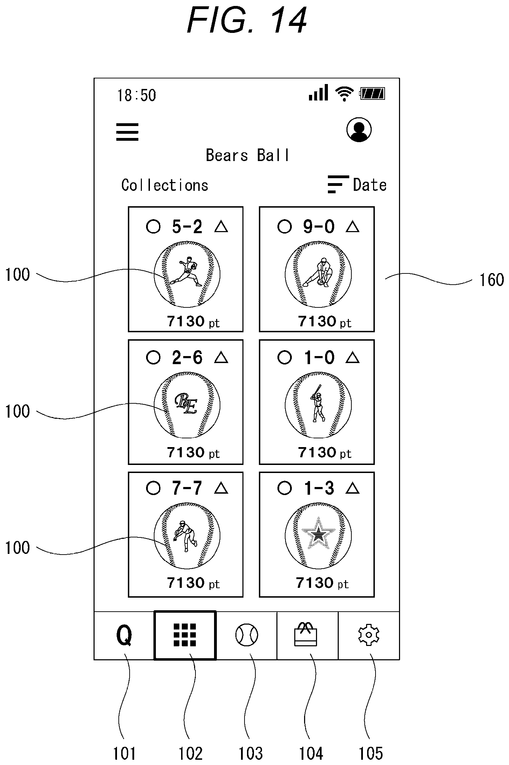

Fig. 14 is an example of the collection screen 160. The user can earn the item 100 for each game by logging in to the game linked service and generating the item 100 for each game. The main server 2 manages the item 100 for each user.

When the user operates the collection icon 102, the main server 2 provides the collection screen 160 of the user to the terminal device 5. Accordingly, the user can list the items 100 acquired in the past.

The above is an example of a screen by the game linked service.

As main processing for the game linked service, the main server 2 performs editing and the like of the item 100 corresponding to the game information or the user information, and presents the result edited item to the user by the terminal device 5.

Based on such main processing, matters assumed in the game linked service will be described below. This is an example assuming a baseball game.

The item 100 is desirably an item related to the sports. From this point of view, images of a ball, a bat, a uniform (hat, clothing, shoes, wristband), a player portrait, a character logo of a team, a mascot logo, a team mascot, a cheer leader, and the like can be considered as examples of the item 100.

For example, the game linked service may be a service in which the user not only collects the item 100 of the ball but also collects the item 100 of the bat or the team character. For example, the game linked service may be processing in which the character is edited according to the game information or the user information.

Furthermore, it is also conceivable to virtualize an actual cheer leader and process the dress, hairstyle, and makeup of the cheer leader according to the game information and the user information.

The types of these items 100 may be decided on the main server 2 side, but the user may select an arbitrary item 100.

The item 100 is edited according to the game information and the user information. An example of how to edit with what information will be described.

Examples of the game information (the fixed game information or the game progress information) include game progress scores/results, stats, player profiles (birthday and the like), seasons, weather, starting members, EPTS data, and the like.

Furthermore, examples of the user information (the fixed user information or the user reaction information) include a quiz answer, an operation of the WOW button 120, a user position, user attribute information, a fan reaction, and the like.

The main server 2 edits the item 100 based on the game progress score and the result. For example, the display corresponding to the game situation can be performed by making edits to express situations such as the support team being in the lead, being led, a close score, a tie, a victory, or a defeat.

The main server 2 may edit the item 100 by reflecting the season and the weather. For example, the background is changed according to the weather. It is possible to generate the item 100 that reminds the user of the experience on the day of the game.

In the main server 2, the edit content of the item 100 may vary depending on the starting member or the substitute participating member. For example, the item 100 may be edited according to who the bench players are, whether the support player performs standout performances, and the like.

The main server 2 may change the item 100 according to the performances, conditions, and the like of a player or a team before the start of the game. For example, the item 100 is changed based on the current ranking in the league, the type of game, such as a semifinal and a final in a tournament, and the like. In a case where the portrait of the player is set as the item 100, the item 100 may be changed based on the performance and condition of the player.

The main server 2 may change the item 100 according to a performance (strikeouts, stolen bases, home runs, multi-hits, and the like) of the player during the game, an achievement record (such as consecutive at-bat hit records, consecutive at-bat home run records, shutout wins, no-hitters, and perfect games), and the like. This makes it suitable for generating the item 100 corresponding to the content of the game.

The main server 2 may use the EPTS data as the game information and change the item 100 based on pitch rotation speed, the initial speed of the hit ball, and the like. By changing the item 100 in response to detecting a special motion, edits specific to that game are added to the item 100. Furthermore, a characteristic motion, play, or the like of the player the user is supporting may be determined using the EPTS data, allowing for change to the item 100.

The main server 2 edits the item 100 according to the presence or absence of the answer of the user to the quiz, the correct/incorrect answer, the operation of the WOW button 120, and the like. Accordingly, the item 100 can be changed according to the degree of participation of the user in the game and the game linked service.

The main server 2 may change the item 100 according to the location of the user. For example, the item 100 is made different between a person in a stadium and a person who is watching television.

The main server 2 may change the item 100 according to the profile of the user. For example, in a case where the user is on a birthday, the design of the item 100 is made different from usual. Furthermore, it is also conceivable to associate the profile of the user with the game information and generate an opportunity for item editing, for example, to change the item 100 in a case where a player of the same birthday month or the same hometown as the user has performed standout performances.

The above is merely an example. In addition to these, various examples of editing the item 100 according to the game information or the user information can be considered.

Furthermore, the game information may be prioritized (weighted).

For example, the priority of the game information in the exciting scene may be increased in the progress of one game. More specifically, for example, the priority level of information in the second half (for example, in the case of baseball, the fifth inning and the seventh inning) of the progress of one game is set to be high. In a baseball game, the fifth inning and the seventh inning are often more exciting, so it is conceivable to increase the priority of the stats data.

Furthermore, if there is a player having a birthday on the game day, it is conceivable to increase the priority of the stats data of the player.

The stats data about the team or player supported by a user may be weighted when referenced for the user.

Furthermore, the priority may be dynamically changed according to an important scene or a scene of a gaming point. It is conceivable to increase the priority of the stats data in an important case in consideration of the flow of the game.

The excitement can also be determined based on the cheers of spectators, so the priority may be changed accordingly.

Next, an example of editing (editing, processing, and information addition) of the item 100 will be described.

As the editing of the item 100, it is conceivable to change the color, pattern, text, and image with respect to the item 100. Furthermore, the color or pattern of the background of the item 100 may be changed or text may be added.

It is also conceivable to change the size or form of the item 100.

A sound may be added to the item 100.

Furthermore, a motion, such as rotation of a ball or swing of a bat may be added to the item 100 itself.

Addition of a link with another content or the like may be performed on the item 100.

A QR code (registered trademark), a coupon, or the like may be added to the item 100.

Furthermore, the editing of the item 100 may be partially performed instead of the entire item 100.

For example, color is applied to each portion with a seam of a ball as a boundary.

The user can acquire the item 100 edited in this manner, but instead of merely collecting the item, there may also be a service as a benefit.

For example, by presenting the edited item, the user can obtain special merchandise or utilize a QR code and a coupon added to the item.

Note that, as a stage where the item 100 is not completed in the middle of a game or the like, for example, even if all answers to the quiz are not correct, the item may be edited, processed, or added with information according to the answer. In a case where the user has not participated in the quiz, a "blank ball" may be output.

The use of the item 100 can be considered as follows.

There is an example in which the item 100 collected by the user can be used in other content (such as gaming).

For example, strength, speed, rotation, and the like corresponding to the item 100 are stored as data associated with the item 100. Then, the stored data is reflected in other gaming. What data to store is only required to be determined depending on gaming to be used.

Only the graphics of the item 100 may be made available for other content. The item 100 may be displayed in other content related to the game. For example, the item 100 is displayed in content such as a digest video of a game, a cartoon content obtained by adapting the game into a cartoon, and a still image book of the game.

It is also conceivable that the main server 2 or the terminal device 5 manages information indicating what kind of information as the game information or the user information the item 100 has been generated on the basis of. Such information may be used as a reference of the value of the item 100.

The item 100 can be traded or exchanged. Transactions such as the trade or exchange of the item 100 may be off-chain or on-chain.

A right may be granted to the user who owns the item 100. For example, a right to add the digital signature of the player is given to the user who owns the item 100 to which a specific design is added, the user who owns the item 100 ranked high in the point ranking, and the like.

Assuming the example of the game information and the user information, the example of the item 100, the example of the mode of editing the item 100, and the like described above, some examples will be described from the viewpoint of how the item 100 changes according to what information.

### [Example 1]

The user who has logged in to the game linked service selects an area (one of divisions of the stadium) before the game (see Fig. 12A). When a ball hit by a player enters the selected area, a point is added, and the color and pattern of the item 100 change as the point (the number of hit balls having entered) increase.

### [Example 2]

From the user information and the game information, when a player attracting attention of the user hits during the game, the graphic of the player superimposed on the item 100 is displayed larger than before the hit, or a motion in which a mascot character of the team appears is added.

### [Example 3]

In the case of baseball, in exciting innings such as the fifth inning and the seventh inning, a magnification for acquiring the point is increased. Alternatively, the point magnification is increased for a specific player for each user. For example, the points are added by the number of hits of the support team, and the point magnification is increased in the case of the hits of the fifth inning and the seventh inning or the hit of the support player.

### [Example 4]

The display differs depending on the place (for example, a stadium) where the game is being held. For example, a local product of a place of the stadium is displayed as the item 100 itself or an object to be displayed in the item 100 or in the background.

### [Example 5]

The color, pattern, motion, and the like of the ball which is the item 100 are changed based on the speed, rotation, pitch type, altitude, and the like of the ball thrown by the pitcher.

### [Example 6]

The ball which is the item 100 is rotated and displayed in accordance with the direction of the spin of the ball thrown by the pitcher. Furthermore, display based on the EPTS data and the image data VD is performed inside and outside the ball which is the item 100. For example, in a case where the rotation speed is obtained as the EPTS data, the rotation speed is displayed as text or the like.

### [Example 7]

The ball which is the item 100 is divided into areas by, for example, division by a seam or the like, and edited so as to gradually change for each area according to the game information or the user information. Not only the surface but also the back side of the ball may be edited.

### [Example 8]

The way of rotation when the user performs an operation of touching the ball as the item 100 is changed according to the game information, the user information, a point, or the like. For example, a person with a high point can increase the speed of motion of the ball. In addition to the rotation of the ball, a motion that distorts the ball or a motion that gradually changes in size, color, or the like may be generated according to a touch operation.

Note that, although the above description has been given of an example of a baseball game, there are various types of sports to which the game linked service can be applied. Examples thereof include soccer, American football, rugby, basketball, volleyball, tennis, and golf. In particular, a ball game is suitable for sports using the EPTS system. Of course, it may be sports other than the ball game. For example, it can also be used in gymnastics, skating, track and field, swimming, judo, kendo, boxing, fencing, and the like.

The item 100 is considered according to the sports. A soccer ball is considered for soccer, a boxing glove is considered for boxing, and a racket is considered for tennis.

The game information is also assumed for each sport.

Furthermore, as for the game information, an example of the stats data of baseball has been described, but the game information varies depending on the sports. In the case of soccer, the stats data includes the following data.
- Number of goals: The number of goals scored during a season
- Number of shots: The number of shots made
- Number of shots on Target: The number of shots made within a goal frame
- Number of last passes: The number of passes that resulted in a goal chance.
- Number of one-touch passes: The number of one-touch passes made
- Number of aerial duels: The number of instances contested for a ball in the air
- Number of tackles: The number of attempts made to take a ball from a ball holder
- Distance run: The distance each player ran during a game

### <3. Flow of Game Linked Service>

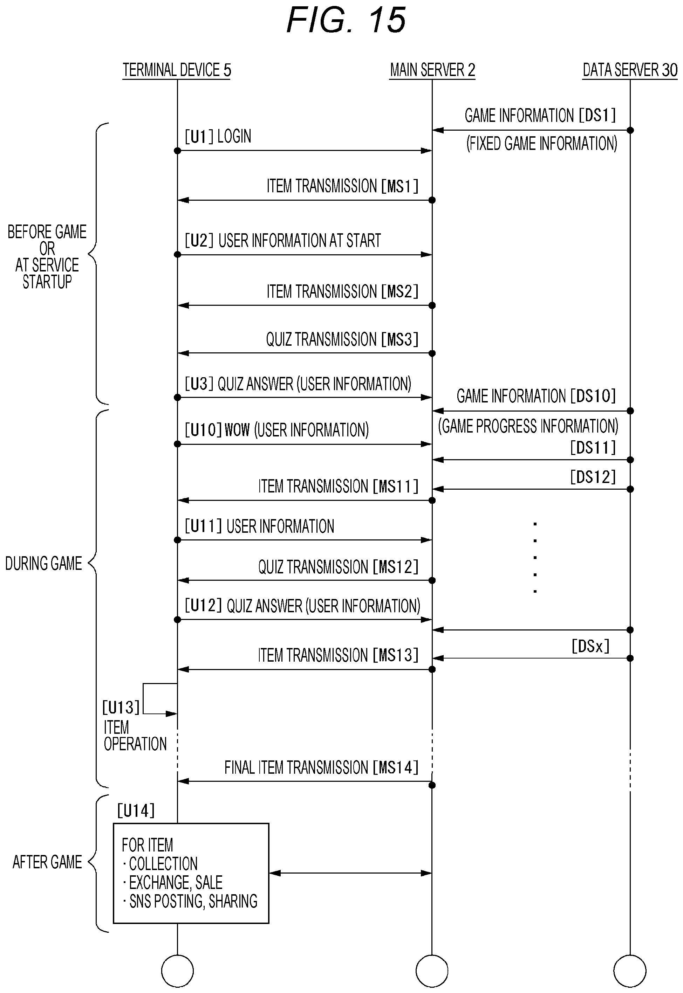

An example of a specific flow of processing of the game linked service will be described with reference to Fig. 15. Fig. 15 illustrates an example of a flow of processing while illustrating communication among the terminal device 5, the main server 2, and the data server 30. Note that, as described with reference to Figs. 2 and 3, the data server 30 does not indicate one specific device, but indicates a source of the game information for the main server 2.

Hereinafter, the processing of the terminal device 5 is denoted by "U*" (* is a number), the processing of the main server 2 is denoted by "MS*", and the processing of the data server 30 is denoted by "DS*", which will be described in time series.

### [Processing DS1]

The main server 2 that provides the game linked service acquires the game information from the data server 30 at a stage before a game such as baseball. The game information in this case is fixed game information. Specifically, the game information is mainly stats data or historical data before the start of the game.

### [Processing U1]

The user logs in to the game linked service from the terminal device 5. The main server 2 performs login processing for the user's account and starts processing of the game linked service for the user.

### [Processing MS1]

The main server 2 transmits an initial item 100 to the terminal device 5 and causes the terminal device 5 to display the item. For example, the item 100 is displayed as the blank ball in Fig. 8.

### [Processing U2]

The terminal device 5 transmits the user information at a stage before the start of the game to the main server 2 automatically or according to a user operation. The user information in this case is fixed user information. However, the main server 2 may store the fixed user information for the user registered in the game linked service, so that the main server 2 may acquire the fixed user information from the storage 23 for the logged-in user.

Furthermore, the terminal device 5 may transmit user information that is not stored in the main server 2. For example, there is information of a player or a team that the user is particularly interested in, such as a player aiming to break a record in that game. The main server 2 may perform processing of displaying a questionnaire screen or the like of the target player or team on the terminal device 5 and obtaining an answer of the user.

### [Processing MS2]

The main server 2 transmits the item 100 corresponding to the user information to the terminal device 5 and displays the item. For example, as illustrated in Fig. 5, the item 100 which is a ball including a team logo is displayed on the basis of information of the support team of the user.

Note that, if the user information (for example, a support team) has been acquired at the time of login, a ball including a team logo or the like may be displayed from the beginning instead of the blank ball. Alternatively, the item 100 may remain as the blank ball until the start of the game.

### [Processing MS3]

The main server 2 can transmit a quiz to the terminal device 5 of the logged-in user at a timing before the start of the game. For example, as illustrated in Fig. 12A, a quiz screen 140 for an area into which a hit ball flies is displayed. Examples of the quiz before the start of the game include a prediction quiz of a standout player of the game. Note that in addition to the quiz, a questionnaire or the like may be used.

### [Processing U3]

In response to the user operation, the terminal device 5 transmits, to the main server 2, information of the answer of the user to the quiz, the questionnaire, or the like provided at a stage before the start of the game. The main server 2 stores the information as one piece of the user reaction information.

The above is an example of a rough flow before the start of the game. Processing after the start of the game will be described below.

Note that the processing U1 to the processing MS2 are performed for the user who logs in after the start of the game, and thereafter, the processing in the game described below may be performed.

### [Processing DS1] to [Processing DSx]

During the game, the main server 2 sequentially acquires the game information from the data server 30. The game information in this case is game progress information. Specifically, the game information includes EPTS data, image data, stats data of the game, analysis data, and the like.

### [Processing U10]

In a case where the user operates the WOW button 120 during the game, the operation information is transmitted from the terminal device 5 to the main server 2. The main server 2 stores the information as one piece of the user reaction information. Note that the main server 2 may determine a timing on the basis of the game progress information and perform display control of the WOW button 120 in the terminal device 5. For example, the WOW button 120 is displayed on the terminal device 5 when there is an excellent play.

### [Processing MS11]

The main server 2 performs item editing according to the game information and the user information during the game, and transmits the edited item 100 to the terminal device 5. Accordingly, in the terminal device 5, the item 100 changes during the game.

### [Processing U11]

During the game, the user information is transmitted from the terminal device 5 to the main server 2. For example, information such as the position information, action, behavior, and cheer of the user is transmitted. The main server 2 stores the information as one piece of the user reaction information.

### [Processing MS12]

The main server 2 can transmit a quiz or a questionnaire to the terminal device 5 of the user during the game. For example, a quiz corresponding to the progress of the game, such as whether or not a score can be achieved in a scene of a chance, can be considered. Furthermore, a mission may be requested from the user. For example, the mission is to request imaging of a specific place, request to go to a specific place at a certain time, upload a state of watching a game to a social networking service (SNS), or the like.

### [Processing U12]

In response to the user operation, the terminal device 5 transmits, to the main server 2, information of the answer of the user to the provided quiz, questionnaire, or the like and information of the completion of the mission. The main server 2 stores the information as one piece of the user reaction information.

### [Processing MS13]

The main server 2 performs item editing according to the game information and the user information during the game, and transmits the edited item 100 to the terminal device 5. That is, processing of further changing the item edited in the processing MS11 is performed. In this manner, the main server 2 performs item editing a plurality of times. As a result, in the terminal device 5, the item 100 gradually changes during the game.

### [Processing U13]

The terminal device 5 performs processing of changing the display mode of the item 100 according to the user operation on the item 100.

### [Processing MS14]

The main server 2 finally edits the item before and after the time point of the end of the game, and transmits the edited item 100 to the terminal device 5. This is the item 100 finally acquired by the user in this game, and is provided to the user as, for example, an NFT item. On the terminal device 5, the final item 100 is displayed. Furthermore, the main server 2 stores, in the storage 23, the information of the item 100 acquired by the user in the current game. The main server 2 can also generate content such as a digest video of a game, game information, edit data of the item 100, or the like, and store, in the storage 23, the generated content or metadata as content or metadata related to the item 100.

Note that, in a case where the user logs out before the end of the game, the item 100 may be invalidated, or the item 100 at that time point may be stored in the storage 23 as being acquired by the user.

### [Processing U14]

After the game, the user can confirm the owned item 100 on the collection screen 160 of Fig. 14 in the terminal device 5.

Furthermore, it is possible to exhibit and sell the item 100 in the market based on the NFT market function 50 or purchase the item 100 which is available for sale.

Furthermore, exchange of the item 100, posting to an SNS, sharing, and the like may be enabled.

The above is an example of the flow of processing based on the game linked service, and in particular, the order of each processing during the game is not fixed. In any case, the item 100 is generated as a personal digital item on the basis of the game information or the user information.

### <4. First Processing Example>

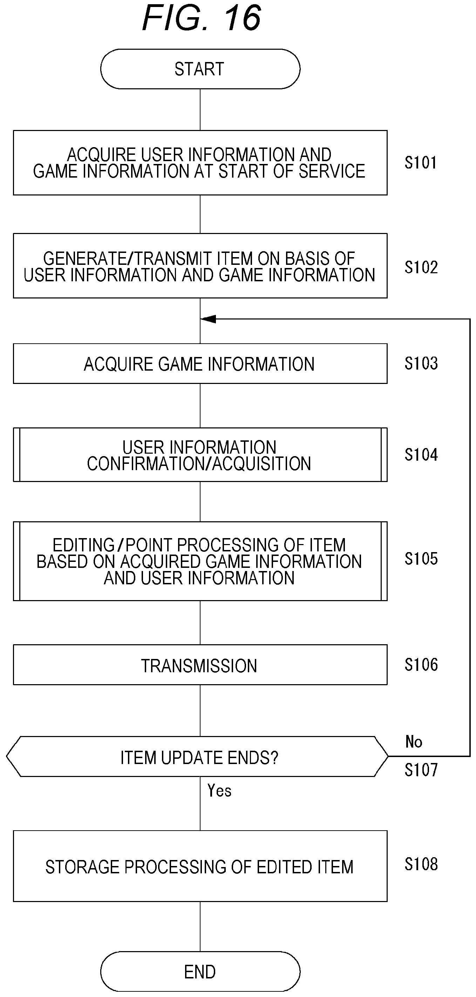

A processing example of the main server 2 for realizing the game linked service as described above will be described with reference to Figs. 16 to 19. The following processing is a processing example executed by the game linked service function 40 in Fig. 3 in the calculation unit 21 of the main server 2. The processing of the calculation unit 21 is processing executed by the CPU 71 in a case where the information processing device 70 in Fig. 4 is a configuration of the main server 2.

However, some processing may be performed on the terminal device 5 side. The processing is executed by the CPU 71 in a case where the information processing device 70 in Fig. 4 is a configuration of the terminal device 5.

Fig. 16 illustrates processing after the terminal device 5 logs in the game linked service. In step S101, the calculation unit 21 acquires the user information and the game information at the start of the service for a logged-in user.

In step S102, the calculation unit 21 transmits the item 100 to the terminal device 5 on the basis of the user information and the game information and causes the terminal device 5 to display the item 100. For example, a blank ball, a ball containing only a team logo, or the like is displayed as the item 100.

During the game, the calculation unit 21 repeats the processing from step S103 to step S107.

In step S103, the calculation unit 21 acquires the game information from the data server 30. Since the game information is sequentially and continuously transmitted, the calculation unit 21 acquires the transmitted game information at each step S103.

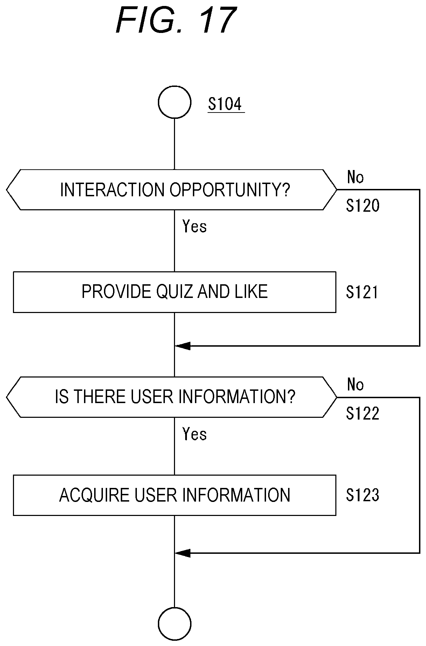

In step S104, the calculation unit 21 performs processing of confirming and acquiring the user information. For example, the calculation unit 21 performs the processing of Fig. 17.

In step S120 of Fig. 17, the calculation unit 21 determines whether or not it is an opportunity to request some interaction from the user. For example, the calculation unit 21 determines whether or not it is an opportunity to present a quiz, a questionnaire, a mission, or the like on the basis of the game information or the user information. It is conceivable that the calculation unit 21 determines, as the interaction opportunity, a time point when a specific inning ends, a time point when a predetermined time elapses from the start of a game, a time point when a specific play occurs, a time point when the user takes a specific action, or the like.

If it is determined as the interaction opportunity, the calculation unit 21 proceeds to step S121, generates information such as a quiz, a questionnaire, and a mission, transmits the information to the terminal device 5 to present the information to the user, and proceeds to step S122.

In this case, for the content of the quiz or the like, the calculation unit 21 may transmit a quiz with a certain fixed content, or may generate a timed quiz with reference to the game information.

For example, on the basis of the game progress information, it is possible to generate a quiz such as whether or not a certain record can be achieved in the current game, a quiz such as how many points can be scored in the current chance, or a quiz such as who is a player who has performed a specific motion for the specific motion determined from the EPTS data.

If the calculation unit 21 does not determine in step S120 that there is the interaction opportunity, the calculation unit 21 proceeds to step S122.

In step S122, the calculation unit 21 determines whether or not any user information has been received. For example, the reception of the operation information of the WOW button 120, the position information of the user, the answer information to the quiz or the questionnaire, the mission clear information, and the like is confirmed.

Note that the timing is indefinite since the answer to the quiz or the like is transmitted based on the user operation or the like, and the answer is not obtained in step S122 immediately after step S121.

That is, step S122 is processing of determining whether or not the position information at that time point, the information arbitrarily input by the user, the operation information of the WOW button 120 and the like, the answer information, the information regarding the mission, the information of cheers, and the like have been received.

If these pieces of information have been received, the calculation unit 21 proceeds to step S123 and acquires these pieces of information as the user information (user reaction information).

Note that since the user information is information unique to each user who logs in, it goes without saying that the calculation unit 21 acquires and manages the user information for each user.

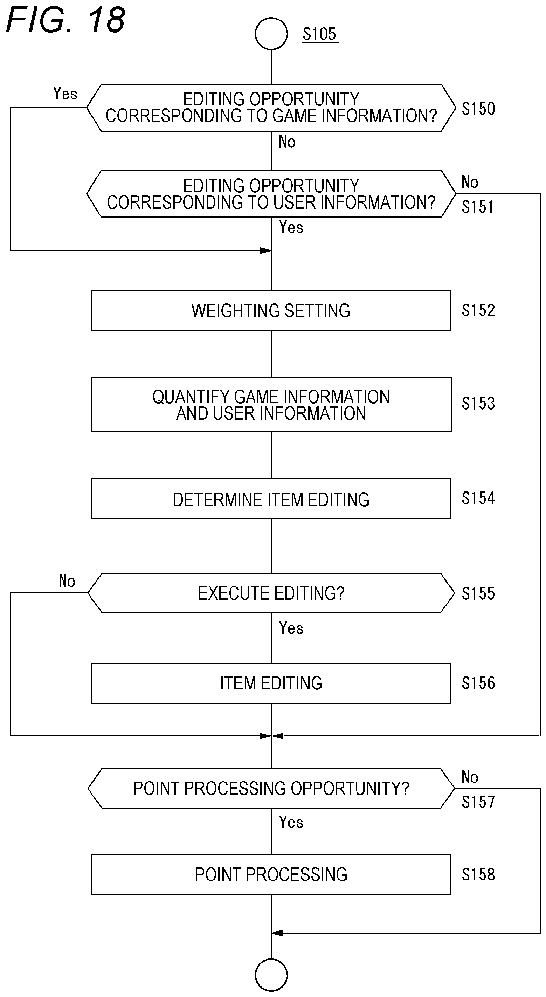

After executing the processing of Fig. 17 described above in step S104 of Fig. 16, the calculation unit 21 proceeds to step S105 and performs editing processing and point processing on the item 100. For example, the calculation unit 21 performs the processing of Fig. 18. Note that Fig. 18 illustrates processing performed for each user.

In step S150, the calculation unit 21 determines whether or not it is an editing opportunity of the item 100 corresponding to the game information. The editing opportunity of the item 100 is only required to be determined in advance as an end time point of a specific inning, an occurrence time point of a specific play, a time point when a score is obtained, a time point when a specific recording is achieved, or the like. The calculation unit 21 determines whether or not it is currently such an opportunity.

If the calculation unit 21 determines that it is the editing opportunity of the item 100 corresponding to the game information, the processing proceeds to step S152.

On the other hand, if the calculation unit 21 determines that it is not the editing opportunity of the item 100 according to the game information, the processing proceeds to step S151, and it is determined whether or not it is an editing opportunity of the item 100 corresponding to the user information. The editing opportunity of the item 100 in this case is assumed to be, for example, a scoring time point of a team that the user supports, a time point corresponding to the play of a player that the user supports, a time point related to an answer result of a quiz or a questionnaire, for example, a place into which a hit ball flies, or the like, a time point when mission clear information is obtained, a time point when specific user interaction is performed, and the like. The calculation unit 21 determines whether or not it is currently such an opportunity.

If the calculation unit 21 determines that it is the editing opportunity of the item 100 corresponding to the user information, the processing proceeds to step S152.

Therefore, when the calculation unit 21 determines that it is the editing opportunity of the item 100 on the basis of the game information or the user information, the processing of editing the item 100 is performed after step S152.

On the other hand, if it is not determined that there is the editing opportunity of the item 100 by referring to either the game information or the user information, the calculation unit 21 proceeds to step S157 without editing the item 100.

In step S152, the calculation unit 21 performs weighting setting. The weighting is to perform weighting setting in the case of quantifying the value of the game information or the user information of interest regarding the item editing. For example, as described above, the game progress information and the user reaction information of the fifth inning and the seventh inning are set to have a higher weighting factor than those of other innings. Furthermore, the play of the support player of the user may be set to have a higher weighting factor than the plays of other players.

Note that the calculation unit 21 may perform weighting setting according to the fixed game information or the fixed user information. For example, the value is increased for the play of the user of the birthday or the player of the birthday, or the weighting is changed according to the type of the game such as championship game.

In step S153, the calculation unit 21 quantifies the game information and the user information. In particular, it is conceivable that the calculation unit 21 quantifies the user reaction information in order to specify the value of the user reaction information. For example, the quiz answer operation and the result up to that time point, the WOW button operation, and the like are quantified and used as evaluation values of the degree of participation of the user in the game and the game linked service. For example, the quiz answer, the correct/incorrect answer, the timing of the WOW button 120, the achievement of the mission, and the like are quantified and used as the evaluation values of the participation of the user.

Furthermore, the calculation unit 21 also reflects the weighting setting in step S152 at the time of quantification. For example, in a quiz for selecting an area as illustrated in Fig. 12A, an example is assumed in which a numerical value in a case where a hit ball has flown into the selected area of the user in the fifth inning or the seventh inning is set to be higher than a numerical value in a case of another inning.

Such quantification processing is performed on the user reaction information stored at that time point, and the total is used as the evaluation value of the degree of participation of the user.

Furthermore, similarly, the game progress information may be quantified.

In step S154, the calculation unit 21 determines whether or not to perform item editing. For example, the quantified user reaction information or game progress information is compared with a predetermined threshold.

If the value of the quantified user reaction information or game progress information exceeds the threshold, the calculation unit 21 does not determine to execute the editing and proceeds from step S155 to step S157. That is, the item editing is not executed.

If the value of the quantified user reaction information or game progress information exceeds the threshold, the calculation unit 21 determines to execute the editing, and the calculation unit 21 proceeds from step S155 to step S156 and performs the item editing. For example, the calculation unit 21 decides edit content according to the type or content of the game information or the user information determined as the item editing opportunity, the sum of the quantified evaluation values, and the like, and edits the item 100.

Examples of the editing processing include addition of a design, a text, or the like representing game progress, play content, an achievement record, or the like, display of stats data, addition of a design, a text, or the like representing content corresponding to the interaction of a user, partial color change of the item 100, addition of a logo or a character, and the like. Furthermore, in addition to editing of the item 100 itself, generation and association of content such as a replay video of a certain play, a free viewpoint image, and an animation may be performed.

Furthermore, by performing the processing of changing the color of the ball according to the result of the quiz, editing is performed such that the ball evolves when the correct answer is given to the quiz.

Furthermore, the background color may be changed according to the situation of the game or the win or loss. For example, hitting a home run, taking the lead, or winning the game causes the background color to become gold, and losing causes the background to become red.

The editing may be such that the ball is spun on the basis of the stats data or the like.

There is also editing in which images, signs, uniforms (uniform numbers), and the like of players are superimposed.

Furthermore, as the editing processing, for example, it is conceivable to perform editing such as a benefit corresponding to the ranking of the point of the user. For example, a right to obtain a digital signature of a player is added to a top-ranking person, and the digital signature is superimposed on the item 100.

Furthermore, as the editing processing, processing of editing each area of the item 100 may be performed. For example, as a predetermined area (part, section), the portion divided by the seam or each part of the leather is determined in advance when the item 100 is a ball, and a sleeve, a chest, a collar, a number, a front surface, a back surface, and the like are determined in advance when the item 100 is a uniform. Then, in step S156, the calculation unit 21 edits a specific area of the item 100.

Subsequently, in step S157, the calculation unit 21 determines whether or not it is a point processing opportunity. For example, the calculation unit 21 determines whether or not the currently processed game information or user information relates to point granting and determines whether or not it is the point processing opportunity.

If it is the point processing opportunity, the calculation unit 21 proceeds to step S158 and performs point granting processing. For example, the calculation unit 21 performs point granting according to the type and content of the game information or the user information having led to the determination of the point processing opportunity.

If the processing of Fig. 18 is performed in step S105 of Fig. 16, the calculation unit 21 proceeds to step S106 and performs transmission processing. This is processing of transmitting the edited item 100 and new point information to the terminal device 5.

Accordingly, in the terminal device 5, the edited item 100 and the updated point value are displayed.

Note that, in a case where the item editing and the point addition are not particularly performed in the immediately preceding step S105 (the processing of Fig. 18), the transmission to the terminal device 5 may not be performed in step S106.

In step S107, the calculation unit 21 determines the end of the item update. For example, as a trigger of the end, input of the information of game end as the game information, a logout by the user, or the like is assumed.

If the trigger for ending the item update is not detected, the calculation unit 21 returns to step S103 and repeats the above processing.

If the trigger of ending the item update is detected, the calculation unit 21 proceeds from step S107 to step S108, and performs processing of finally confirming the state of the item 100 and causing the storage 23 to store the state as the item 100 acquired by the user. At this time, final editing may be added. For example, the calculation unit 21 may add a design as the final completed item 100, generate content regarding a game and associate the content with the item 100, or provide various types of information such as link information, game information, user reaction information, item editing information, and benefit information. Furthermore, the calculation unit 21 may perform processing of setting the item 100 as an NFT item.

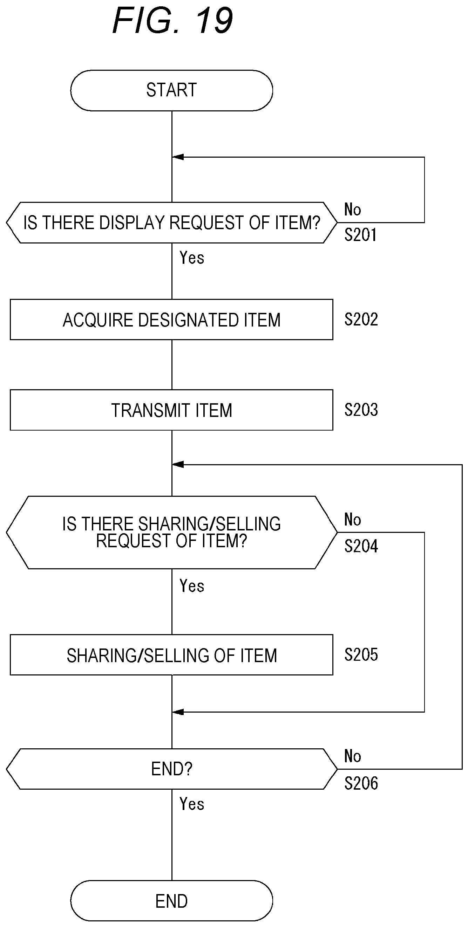

Fig. 19 illustrates processing of the calculation unit 21 of the main server 2 regarding utilization of the item 100 after the game. Note that this processing may also be considered as processing performed by the terminal device 5.

In step S201, the calculation unit 21 monitors the display request of the item 100.

For example, the calculation unit 21 monitors an operation in which the user requests display of an item finally generated immediately after the game and stored in the storage 23. Alternatively, the calculation unit 21 monitors an operation in which the user selects a certain item 100 on the collection screen 160 of Fig. 14 and requests display of the item 100.

In a case where there is a display request of a certain item, the calculation unit 21 proceeds to step S202 and acquires the designated item 100 from the storage 23.

In step S203, the calculation unit 21 displays the item 100 on the terminal device 5.

In step S204, the calculation unit 21 monitors that the user performs an item use operation such as sharing processing and a selling request with respect to the item.

In a case where the user has performed the item use operation, the calculation unit 21 proceeds to step S205 and performs processing instructed on the item 100. For example, the processing includes processing of exhibiting in the market by the NFT market function 50, SNS upload processing, sharing processing, and the like.

In step S206, the calculation unit 21 determines whether to end the processing related to the item 100, and ends the processing if it is determined to end.

As described above, the user can use the item 100 generated by the game in another service or the like.

Note that the item 100 generated by the game may be acquired as it is for free by the user, may be provided to a person who has purchased the item and a person who satisfies the condition in the correct answer rate of the quiz, or may be provided randomly.

### <5. Second Processing Example>

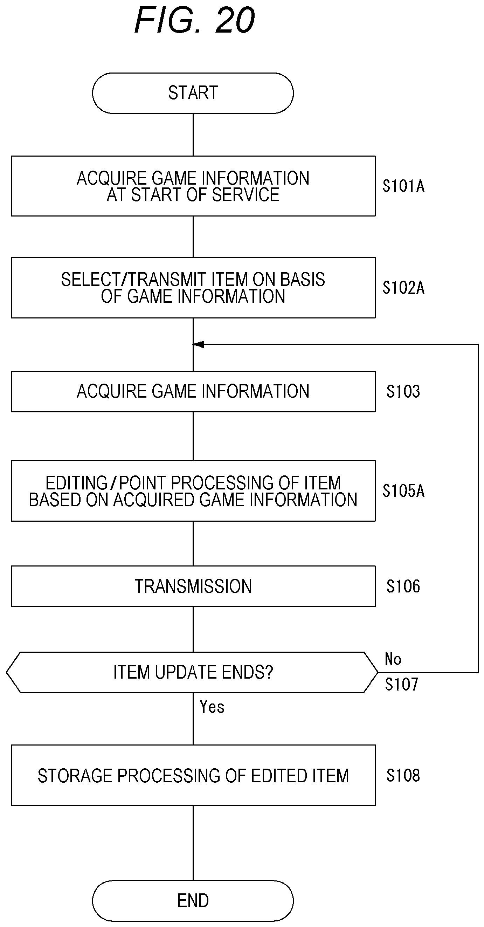

Fig. 20 illustrates a second processing example. Fig. 20 illustrates an example in which the user information is not used for editing the item 100. Note that the same processing as that in Fig. 16 are denoted by the same step number.

In step S101A, the calculation unit 21 acquires the game information at the start of the service for a logged-in user.

In step S102A, the calculation unit 21 transmits the item 100 to the terminal device 5 on the basis of the game information to display the item 100. For example, a blank ball, a ball containing only a team logo, or the like is displayed as the item 100.

During the game, the calculation unit 21 repeats the processing from step S103 to step S107.

In step S103, the calculation unit 21 acquires the game information from the data server 30.

In step S105A, the calculation unit 21 performs editing processing and point processing on the item 100. For example, the calculation unit 21 determines whether or not it is an editing opportunity on the basis of the game information, and executes editing according to the game information if it is the editing opportunity. Furthermore, point granting processing is performed according to the game information.

In step S106, the calculation unit 21 performs processing of transmitting the edited item 100 and new point information to the terminal device 5. Accordingly, in the terminal device 5, the edited item 100 and the updated point value are displayed.

In step S107, the calculation unit 21 determines the end of the item update.

If the trigger for ending the item update is not detected, the calculation unit 21 returns to step S103 and repeats the above processing.

If the trigger of ending the item update is detected, the calculation unit 21 proceeds from step S107 to step S108, and performs processing of finally confirming the state of the item 100 and causing the storage 23 to store the state as the item 100 acquired by the user.

As illustrated in Fig. 20, a processing example in which the generation control processing of the item 100 is performed according to the game information without using the user information is also conceivable. Accordingly, it is possible to realize the game linked service in which the digital item corresponding to the situation of the game is generated.

Note that, also in this case, the processing for item utilization as illustrated in Fig. 19 can be similarly performed after the game.

### <6. Conclusion and Modifications>

In the above embodiment, the following effects can be obtained.

The information processing device 70 as the main server 2 of the embodiment includes the calculation unit 21 that performs generation control processing of the digital item (item 100) corresponding to the game on the basis of the game information (see Figs. 16 and 19).

For example, the calculation unit 21 controls, for example, processing of gradually editing a blank ball as the generation control processing of the item 100. Accordingly, the item 100 corresponding to the game is generated. The user can acquire the item 100 as a commemorative item or the like corresponding to the game, and the user can be provided with a service that allows the user to enjoy the game more.

Note that the object to be edited is not limited to only the item 100. The background of the screen, another image of the item 100, the design of the team/score information 110, or the like may also be set as the object to be edited. That is, the digital item is not limited to the item 100.

The calculation unit 21 of the embodiment manages the user information regarding the game and performs the generation control processing of the digital item according to the game information and the user information (see Figs. 16, 17, and 18).

As the calculation unit 21 edits the item 100 by using not only the game information but also the fixed user information or the user reaction information which is the user information, the item 100 is completed according to the attribute, the action, and the like of the individual user. Therefore, the user can acquire a unique item, and service provision that enhances the satisfaction level of the user is realized.

In the embodiment, the user information includes the user reaction information indicating the user interaction regarding the game.

The calculation unit 21 acquires information such as a quiz answer, the operation of the WOW button 120, the position of the user, and a reward (achievements in the mission (imaging of specific part, watching time, presence or absence of SNS posting, and the like)) as the user reaction information, and the item 100 is edited or a point is granted accordingly, thereby reflecting the action of the user and further expanding the ways the user enjoys watching the game.

In the embodiment, an example has been described in which the calculation unit 21 performs the generation control processing of the digital item on the basis of the value obtained by quantifying the user reaction information (see step S153 in Fig. 18).

For example, the numerical values based on the user reaction information include a value indicating how much the user participates in the game (a value obtained by scoring the participation of the user in the game), a point based on a result of the quiz, a reward point, and the like. The display mode of the item 100 is changed according to these values. Accordingly, the participation of the user can be quantified and reflected in the item 100.

Note that such quantification is not necessarily performed. For example, in a case where specific user reaction information is obtained, and processing is performed in which specific editing is performed according to the specific user reaction information, or the like, an example is also conceivable in which quantification is not performed.

In the embodiment, an example has been described in which the calculation unit 21 performs weighting setting at the time of quantifying the user reaction information, on the basis of the game progress information included in the game information, and performs the generation control processing of the digital item on the basis of the value decided by reflecting the weighting (see step S152 in Fig. 18).

For example, the game progress information includes time (the first half of the game, the second half of the game), inning/half, and a score difference. Furthermore, there are also the expectation degree of winning, the excitement level of fan (situations such as a substitution to a popular pitcher, a batter with excellent performance at bat, or bases loaded), and the like. In addition, there is a timing at which a performance in the whole season or an individual record (such as a record of the number of hits/home runs) is given. The weighting setting is performed according to the game progress information, and weighting at the time of quantifying the user reaction information is reflected. Accordingly, it is possible to perform item editing in consideration of the situation and aspect of the game and the reaction of the user to the situation, and it is possible to perform editing corresponding to the attachment or the like of each user to the game. Furthermore, the possibility of unique item generation to each user can be further increased.

In the embodiment, an example has been described in which the calculation unit 21 performs the generation control processing of the digital item for one user so as to reflect a comparison result between the value obtained by quantifying the user reaction information of one user and the value obtained by quantifying the user reaction information of another user (see steps S154, S155, and S156 in Figs. 13 and 18).

For example, editing such as a benefit corresponding to the ranking of the point of the user is performed. A right to obtain a digital signature of a player is added to a top-ranking person, and the digital signature is superimposed on the item 100. Accordingly, it is possible to improve the enjoyment of participation of the user in the game linked service.

In the embodiment, the user reaction information includes answer information for the quiz provided in relation with the game (see Figs. 7 and 17).

The calculation unit 21 provides the terminal device 5 with a quiz regarding the game and acquires the answer information as the user reaction information. Accordingly, it is possible to encourage active participation of the user and obtain the user reaction information, and it is possible to promote diversification of the item 100 for each user.

In the embodiment, the user information includes the position information of the user related to the game. That is, the calculation unit 21 acquires the position information of the user regarding the game and reflects the position information in the editing of the item 100. For example, there is information as a watching place such as a venue (stadium or the like), public viewing, or a remote place (television watching). Furthermore, there is also information such as a seat position in the stadium and a stopping place. Furthermore, in the case of watching a golf game, spectators move the watching place, causing changes in the user position.

By reflecting such position information in the editing, it is possible to generate the item 100 corresponding to the watching form and action of the user, and the like, and to promote diversification of the item 100. In particular, by providing information and a design that make it possible to recognize a game watching place, a seat, and the like, it is also possible to generate an item that evokes memories of the experience at the time of watching.

In the embodiment, the game information includes behavior information, which is generated by analyzing a captured image of a game, regarding any one of a person or a sports object related to the game. Examples of the behavior information include EPTS data (or analysis data based on the EPTS data).

For example, as the EPTS data, the skeleton capture data of a subject person can be obtained by analyzing an image obtained by imaging a game, and the action and behavior of a player or a referee can be determined from the skeleton capture data. Furthermore, a captured image or the sensing data SS of the sensor 4 (a camera, a wearable sensor, a radar, and the like) can also be used. As a result, it is also possible to obtain information of the movement of a ball, a bat, a racket, or another sports object. For example, the information includes a track, a rotation speed, a rotation direction, and a speed of the ball. With these pieces of information, a play situation is determined, and the item 100 can be edited according to the play situation. Therefore, the item 100 in which the content of the game is reflected can be generated.

Note that in the embodiment, an example has been described in which the EPTS data is used as the game progress information. However, a system can be assumed in which the EPTS data is not used as the game progress information. For example, the behavior information based on the sensor 4, the pitching result of a player by the score data server 3, a batting result, and the like can also be the behavior information. Even if these pieces of behavior information are used as the game progress information, the game linked service can be executed.

In the embodiment, an example has been described in which the calculation unit 21 performs the generation control processing of the digital item according to the user reaction information to the information provided according to the behavior information (see Figs. 17 and 18).

For example, the calculation unit 21 presents, to the user, a quiz, a questionnaire, and the like on the basis of the EPTS data and the like, and acquires the operation and behavior of the user, and the like as the user reaction information. Then, the item 100 is edited according to the user reaction information. In this manner, the item editing is performed on the basis of the user reaction information indicating the user interaction with respect to the user interactive option decided on the basis of the EPTS data, which is suitable for generating the unique item 100 to each user.

In the embodiment, an example has been described in which the game information includes the game progress information obtained with the progress of the game, and the calculation unit 21 performs the generation control processing of the digital item on the basis of the acquired game progress information.

The calculation unit 21 edits the item 100 during the game according to the game progress information obtained with the progress of the game. Accordingly, the item 100 edited according to the development and play of the actual game can be provided to the user.

In the embodiment, an example has been described in which the game progress information is information obtained by an analysis result of data detected regarding a game.

For example, the game progress information includes dynamic information related to the game, such as the EPTS data analyzed from an image related to the game or the sensing data SS obtained by the sensor 4, and the motion and behavior of a player or the like, and a game situation determined from the EPTS data. Accordingly, the item 100 can be dynamically edited according to the dynamic information of the game.

In the embodiment, an example has been described in which the calculation unit 21 performs the generation control processing of the digital item such that the digital item is updated according to the acquisition of the game information.

The calculation unit 21 edits the item 100 a plurality of times during the game according to the information obtained with the progress of the game. That is, the item 100 is updated during the game. Accordingly, it is possible to provide the user with the item 100 that evolves according to the development and play of the game.

In the embodiment, an example has been described in which the calculation unit 21 performs processing of storing a digital item as the item generated according to a game, in response to a predetermined ending trigger (see steps S107 and S108 in Figs. 16 and 20).

For example, in response to information of game end, the update end information of the item 100, a logout from the game linked service function 40 by the user, the end operation of an application program by the user, or the like, the item 100 at that time point is stored as the item 100 generated by the game. Therefore, the item 100 can be confirmed at the time point of the end of the game or the like by the game linked service. Furthermore, also in a case where the user logs out in the middle of the game, the item 100 is confirmed at that time point. Therefore, the item is stored according to the game or the situation of the user.

In the embodiment, an example has been described in which the calculation unit 21 performs the processing of associating image content or additional information related to the game with the digital item in response to the ending trigger (see step S108 in Figs. 16 and 20).

For example, the content related to the game includes a digest video and a still image of the entire game or a specific player, and the like. As the additional information, a digital signature of a player, a coupon, a QR code, and the like are assumed. With the association, the user can perform various actions (sharing, selling, and the like) using the digital item after the game.

In the embodiment, an example has been described in which the calculation unit 21 performs the processing of associating the game information with the digital item in response to the ending trigger (see step S108 in Figs. 16 and 20).

For example, the information regarding the game includes game information (fixed game information, game progress information). For example, it is conceivable to associate the score of the game, the performance data of a player, the EPTS data, and the like with the item 100. Furthermore, the user information (fixed user information, user reaction information) obtained during the game may be associated. Storing these pieces of information in association with each other is suitable for the management of the item 100 after the game, the use of the item 100 in another application program or service, and the like.

In the embodiment, an example has been described in which the calculation unit 21 defines a predetermined area for the digital item and performs editing for each area in the generation control processing of the digital item.

For example, as a predetermined area (part, section), the portion divided by the seam or each part of the leather is determined in advance when the item 100 is a ball, and a sleeve, a chest, a collar, a number, a front surface, a back surface, and the like are determined in advance when the item 100 is a uniform. Then, the calculation unit 21 executes editing of the item 100 for each area during the game. Accordingly, the user can enjoy the item 100 that changes for each area according to the progress of the game.

Furthermore, the area to be edited may be different according to the content of the game information or the user information.

In the embodiment, an example has been described in which the calculation unit 21 performs processing of giving a motion related to the game information to the digital item in the generation control processing of the digital item.

For example, as the motion related to the game information, a movement with respect to the maximum value (ball speed, rotation) of the game, a movement corresponding to the given quiz, a movement corresponding to the support player, and the like are given to the item 100. For example, the motion includes the rotation of a ball as the item 100, and further the setting of a rotation speed and a rotation direction. There are also the swing of a bat, the movement of a player icon, and the like. Such a motion is given to the item 100 in accordance with the game information or the user information (for example, a target player, an answer to a quiz, or the like). Accordingly, how the item 100 is presented for each user can be diversified.

Note that the motion data given to the item 100 can also be used in another application program by being stored in association with the item 100.

Note that, although the processing of the calculation unit 21 of the main server 2 has been mainly described in the embodiment, all or part of the processing of the calculation unit 21 may be executed by the CPU on the terminal device 5 side. For example, an example is also conceivable in which the game linked service function 40 of the calculation unit 21 is installed as an application program in the terminal device 5, and processing or the like by the item/content generation unit 45 in Fig. 3 is performed in the terminal device 5, for example.

The terminal device 5 may include other functions, that is, the functions of the game information acquisition unit 41, the user information acquisition unit 42, the game analysis unit 43, the quiz generation unit 44, the storage control unit 46, and the like, and processing by these units may be performed by the terminal device 5.

The program according to the embodiment is a program for causing, for example, a CPU, a digital signal processor (DSP), an AI processor, or the like, or the information processing device 70 including the CPU, the DSP, the AI processor, or the like, to perform the processing illustrated in Figs. 16 to 20.

That is, the program of the embodiment is a program that causes the information processing device to execute the generation control processing of the digital item corresponding to the game on the basis of the game information that is information regarding the game.

With such a program, the information processing device 70 constituting the information providing system 1 according to the embodiment can be achieved in, for example, a computer device, a mobile terminal device, or another device capable of performing information processing.

Such a program may be recorded in advance in an HDD as a recording medium built in a device such as a computer device, a ROM in a microcomputer including a CPU, or the like.

Alternatively, the program may be temporarily or permanently stored (recorded) in a removable recording medium such as a flexible disk, a compact disc read only memory (CD-ROM), a magneto optical (MO) disk, a digital versatile disc (DVD), a Blu-ray disc (registered trademark), a magnetic disk, a semiconductor memory, or a memory card. Such a removable recording medium may be provided as so-called package software.

Furthermore, such a program may be installed from the removable recording medium into a personal computer and the like, or may be downloaded from a download site through a network such as a local area network (LAN) or the Internet.

Furthermore, such a program is suitable for providing the information processing device 70 constituting the information providing system 1 according to the embodiment in a wide range. By downloading the program to a mobile terminal device such as a smartphone or a tablet, an imaging device, a mobile phone, a personal computer, a gaming device, a video device, a personal digital assistant (PDA), or the like, for example, these devices can function as the information processing device 70 constituting the information providing system 1 in the present disclosure.

Note that the effects described in the present description are merely examples and are not limited, and other effects may be provided.

Note that the present technology can also have the following configurations.
(1) An information processing device including:
   a calculation unit configured to perform generation control processing of a digital item corresponding to a game on the basis of game information that is information regarding the game.
(2) The information processing device according to (1), in which
   the calculation unit manages user information regarding the game and performs the generation control processing of the digital item according to the game information and the user information.
(3) The information processing device according to (2), in which
   the user information includes user reaction information indicating user interaction regarding the game.
(4) The information processing device according to (3), in which
   the calculation unit performs the generation control processing of the digital item on the basis of a value obtained by quantifying the user reaction information.
(5) The information processing device according to (3) or (4), in which
   the calculation unit performs weighting setting at time of quantifying the user reaction information on the basis of game progress information included in the game information, and performs the generation control processing of the digital item on the basis of a value decided by reflecting weighting.
(6) The information processing device according to any one of (3) to (5), in which
   the calculation unit performs the generation control processing of the digital item for one user so as to reflect a comparison result between a value obtained by quantifying the user reaction information of the one user and a value obtained by quantifying the user reaction information of another user.
(7) The information processing device any one of (3) to (6), in which
   the user reaction information includes answer information for a quiz provided in relation with the game.
(8) The information processing device any one of (2) to (7), in which
   the user information includes position information of a user related to the game.
(9) The information processing device any one of (1) to (8), in which
   the game information includes behavior information regarding any one of a person and a sports object related to the game, the behavior information being generated by analysis of a captured image of the game.
(10) The information processing device according to (9), in which
   the calculation unit performs the generation control processing of the digital item according to user reaction information for information provided according to the behavior information.
(11) The information processing device any one of (1) to (10), in which
   the game information includes game progress information obtained with a progress of the game, and
   the calculation unit performs the generation control processing of the digital item on the basis of the acquired game progress information.
(12) The information processing device according to (11), in which
   the game progress information includes information obtained by a result obtained by analyzing data detected regarding the game.
(13) The information processing device any one of (1) to (12), in which
   the calculation unit performs the generation control processing of the digital item such that the digital item is updated according to acquisition of the game information.
(14) The information processing device any one of (1) to (13), in which
   the calculation unit performs processing of storing the digital item as an item generated according to the game in response to a predetermined trigger.
(15) The information processing device according to (14), in which
   the calculation unit performs processing of associating image content or additional information related to the game with the digital item in response to the trigger.
(16) The information processing device according to (14) or (15), in which
   the calculation unit performs processing of associating the game information with the digital item in response to the trigger.
(17) The information processing device any one of (1) to (16), in which
   the calculation unit defines predetermined areas for the digital item and performs editing for each of the areas in the generation control processing of the digital item.
(18) The information processing device any one of (1) to (17), in which
   the calculation unit performs processing of giving a motion related to the game information to the digital item in the generation control processing of the digital item.
(19) An information processing method including:
   executing, by an information processing device, generation control processing of a digital item corresponding to a game on the basis of game information that is information regarding the game.
(20) A program for causing an information processing device to execute:
   generation control processing of a digital item corresponding to a game on the basis of game information that is information regarding the game.

### REFERENCE SIGNS LIST

- 1: Information providing system
- 2: Main server
- 3: Score data server
- 4: Sensor
- 5: Terminal device
- 5a: Display unit
- 10: Imaging device
- 11: Recording unit
- 12: EPTS data generation unit
- 21: Calculation unit
- 22: Presentation control unit
- 23: Storage
- 30: Data server
- 40: Game linked service function
- 41: Game information acquisition unit
- 42: User information acquisition unit
- 43: Game analysis unit
- 44: Quiz generation unit
- 45: Item/content generation unit
- 46: Storage control unit
- 70: Information processing device
- 71: CPU

## Claims

1. An information processing device comprising:
a calculation unit configured to perform generation control processing of a digital item corresponding to a game on a basis of game information that is information regarding the game.

2. The information processing device according to claim 1, wherein
the calculation unit manages user information regarding the game and performs the generation control processing of the digital item according to the game information and the user information.

3. The information processing device according to claim 2, wherein
the user information includes user reaction information indicating user interaction regarding the game.

4. The information processing device according to claim 3, wherein
the calculation unit performs the generation control processing of the digital item on a basis of a value obtained by quantifying the user reaction information.

5. The information processing device according to claim 3, wherein
the calculation unit performs weighting setting at time of quantifying the user reaction information on a basis of game progress information included in the game information, and performs the generation control processing of the digital item on a basis of a value decided by reflecting weighting.

6. The information processing device according to claim 3, wherein
the calculation unit performs the generation control processing of the digital item for one user so as to reflect a comparison result between a value obtained by quantifying the user reaction information of the one user and a value obtained by quantifying the user reaction information of another user.

7. The information processing device according to claim 3, wherein
the user reaction information includes answer information for a quiz provided in relation with the game.

8. The information processing device according to claim 2, wherein
the user information includes position information of a user related to the game.

9. The information processing device according to claim 1, wherein
the game information includes behavior information regarding any one of a person and a sports object related to the game, the behavior information being generated by analysis of a captured image of the game.

10. The information processing device according to claim 9, wherein
the calculation unit performs the generation control processing of the digital item according to user reaction information for information provided according to the behavior information.

11. The information processing device according to claim 1, wherein
the game information includes game progress information obtained with a progress of the game, and
the calculation unit performs the generation control processing of the digital item on a basis of the acquired game progress information.

12. The information processing device according to claim 11, wherein
the game progress information includes information obtained by a result obtained by analyzing data detected regarding the game.

13. The information processing device according to claim 1, wherein
the calculation unit performs the generation control processing of the digital item such that the digital item is updated according to acquisition of the game information.

14. The information processing device according to claim 1, wherein
the calculation unit performs processing of storing the digital item as an item generated according to the game in response to a predetermined trigger.

15. The information processing device according to claim 14, wherein
the calculation unit performs processing of associating image content or additional information related to the game with the digital item in response to the trigger.

16. The information processing device according to claim 15, wherein
the calculation unit performs processing of associating the game information with the digital item in response to the trigger.

17. The information processing device according to claim 1, wherein
the calculation unit defines predetermined areas for the digital item and performs editing for each of the areas in the generation control processing of the digital item.

18. The information processing device according to claim 1, wherein
the calculation unit performs processing of giving a motion related to the game information to the digital item in the generation control processing of the digital item.

19. An information processing method comprising:
executing, by an information processing device, generation control processing of a digital item corresponding to a game on a basis of game information that is information regarding the game.

20. A program for causing an information processing device to execute:
generation control processing of a digital item corresponding to a game on a basis of game information that is information regarding the game.
